# FASCICULE DE BREVET EUROPEEN

(11) **EP 0 757 231 B1**
(45) Date de publication et mention de la délivrance du brevet: **26.05.2004**
(21) Numéro de dépôt: 96401545.7
(22) Date de dépôt: 12.07.1996
(51) Int. Cl.: G01B 11/275

(54) **Dispositif de mesure et de contrôle géométrique de véhicules à roues**
Vorrichtung zur Vermessung und geometrischen Kontrolle von Kraftfahrzeugen
Device for measurement and geometric control of wheeled vehicles

(30) Priorité: 02.08.1995 FR 9509413
(43) Date de publication de la demande: 05.02.1997
(73) Titulaire: ACTIA MULLER SERVICES, 31400 Toulouse (FR)
(72) Inventeur: Muller, Patrice, 28000 Chartres (FR); Douine, Denis, 77400 Lagny sur Marne (FR)
(74) Mandataire: Boutin, Antoine

(56) Documents cités:
- EP-A- 0 386 401
- EP-A- 0 495 190
- EP-A- 0 528 552
- WO-A-95/15479
- FR-A- 2 711 238
- US-A- 3 951 550

## Description

L'invention est relative à un dispositif de mesure et de contrôle géométrique de véhicules à roues.

Les dispositifs connus de ce type comportent généralement plusieurs boîtiers ou têtes de mesure fixés sur les roues du véhicule à contrôler, dans le but de déterminer des paramètres physiques représentatifs de la position géométrique individuelle d'une roue par rapport à un plan vertical pré-déterminé ou par rapport à un plan horizontal pré-déterminé, ainsi que des paramètres physiques représentatifs de position géométrique relative d'une roue par rapport à une autre roue du même véhicule.

On connaît en particulier des dispositifs commercialisés sous la référence 8675 par la Société de droit français MULLER BEM, dans lesquels quatre boîtiers ou têtes de mesure comprenant des capteurs optiques linéaires, des inclinomètres et des potentiomètres, communiquent avec une centrale de mesure et de calcul dans le but de déterminer à l'aide d'un programme de commande et de calcul les paramètres physiques et les valeurs caractéristiques de la géométrie d'un véhicule contrôlé.

Ces dispositifs connus donnent entièrement satisfaction, mais présentent l'inconvénient de nécessiter un nombre de capteurs linéaires optiques égal au nombre de paramètres physiques à contrôler, ce qui induit un coût global du dispositif relativement élevé en raison du prix élevé des capteurs optiques linéaires du genre CCD (capteur à couplage de charges) ou PSD (capteur sensible à la position).

Le document EP 0.386.401 B1 décrit un dispositif de mesure de position ou d'alignement de roues avec des têtes de mesure disposées sur les roues de véhicule. Ce dispositif comporte une seule ligne de capteurs qui est agencée dans la zone d'intersection d'un rayonnement horizontal et d'un rayonnement vertical pour la détermination sans contact d'angles horizontaux et verticaux. Le moyen de détermination d'angles horizontaux présente une source de rayonnement de référence agencée à l'extérieur de la tête de mesure avec rayonnement horizontal et une ligne de capteurs pour le rayonnement horizontal. Le moyen de détermination d'angles verticaux présente un axe pendulaire suspendu de façon librement mobile autour d'un axe sur la tête de mesure avec une source de rayonnement vertical et une ligne de capteurs pour le rayonnement vertical. Les deux lignes de capteurs pour le rayonnement horizontal et pour le rayonnement vertical sont constitués par une ligne de capteurs unique qui est agencée dans la zone d'intersection précitée.

Ce dispositif présente ainsi un avantage d'utiliser un seul capteur pour déterminer des paramètres physiques à partir d'un rayonnement horizontal et d'un rayonnement vertical. Cependant, ce dispositif présente l'inconvénient de nécessiter au moins autant de capteurs linéaires optiques du genre CCD que de rayonnements sensiblement horizontaux. Ainsi, pour l'équipement complet comprenant quatre bras fixés aux quatre roues d'un véhicule, il est nécessaire de prévoir au moins huit capteurs linéaires optiques.

En outre, dans ce dispositif connu, il est en pratique nécessaire de disposer le capteur linéaire optique ou ligne de capteurs dans une position prédéterminée suivant une ligne perpendiculaire au plan de rayonnement des lignes de mesure et dans un angle de réception déterminé par la direction des lignes de mesure. La présence de rayonnements horizontaux et verticaux empêche ainsi de positionner le capteur de manière à obtenir une sensibilité maximale de détection et présente en outre les inconvénients d'un volume de boîtier ou tête de mesure relativement important et une difficulté de discrimination entre la tache image produite par un rayonnement horizontal et la tache image produite par un rayonnement vertical sur le même capteur linéaire optique.

Les documents EP 528 552A1, WO 95/15479, EP 495 190A2 et US 3 951 550 sont relatifs à des appareils de mesure de l'art antérieur.

L'invention a pour but de remédier aux inconvénients précités, en fournissant un nouveau dispositif de mesure présentant un nombre de capteurs linéaires optiques moins élevé, aptes à être orientés selon leur angle de sensibilité maximale, et utilisant des rayonnements lumineux sensiblement horizontaux en provenance de source externe ou interne à chaque boîtier de mesure.

L'invention a pour objet un dispositif de mesure et de contrôle géométrique de véhicules à roues, du type comportant au moins un boîtier avec des moyens de détermination de paramètres physiques utilisables pour le calcul des angles et distances caractéristiques de véhicules à contrôler, chaque moyen de détermination de paramètres physiques comportant en combinaison : au moins une source d'émission lumineuse, apte à émettre au moins un rayonnement lumineux sensiblement horizontal, au moins un moyen de formation d'image de ladite source sur au moins un capteur linéaire optique, de préférence du genre CCD (capteur à couplage de charges) ou PSD (capteur sensible à la position), caractérisé en ce que un même capteur linéaire optique situé à l'intérieur dudit boîtier est apte à recevoir simultanément deux rayonnements lumineux sensiblement horizontaux en provenance d'au moins deux sources distinctes agencées à l'extérieur du boîtier et ledit capteur est sensible simultanément ou séquentiellement aux dits au moins deux rayonnements lumineux.

Selon d'autres caractéristiques de l'invention,
- un capteur linéaire optique situé à l'intérieur d'un boîtier est sensible à au moins deux rayonnements lumineux sensiblement horizontaux produits par deux sources agencées à l'extérieur du boîtier.
- le dispositif comporte quatre boîtiers de mesure disposées selon une configuration "régulière".
- le dispositif comporte quatre boîtiers de mesure disposés selon une configuration "croisée".
- le dispositif comporte quatre boîtiers de mesure agencés pour une mesure de paramètres physiques selon les deux diagonales du quadrilatère formé par les boîtiers.
- les moyens de formation d'image de source d'émission lumineuse sont agencés pour la mesure des altitudes relatives des boîtiers les uns par rapport aux autres.
- les moyens de formation d'image de source d'émission lumineuse comprennent au moins une fente en croix ou deux fentes perpendiculaires.
- les boîtiers sont tous situés à l'extrémité de bras s'étendant ver l'extérieur du véhicule.
- les boîtiers sont tous situés à l'extrémité de bras s'étendant vers l'intérieur du véhicule.
- les boîtiers sont situés à l'extrémité de bras s'étendant vers l'avant du véhicule.
- les boîtiers sont situés à l'extrémité de bras s'étendant vers l'arrière du véhicule.
- les boîtiers sont déconnectables ou détachables mécaniquement par rapport aux bras de montage, de manière à modifier la configuration de montage sur les véhicules à contrôler.
- au moins un capteur linéaire optique reçoit au moins un rayonnement sensiblement horizontal agencé pour déterminer des paramètres physiques permettant le calcul d'angles d'inclinaisons verticales.
- chaque rayonnement sensiblement horizontal est émis par une source d'émission lumineuse montée libre en pivotement autour d'un axe fixe par rapport audit capteur linéaire optique.
- chaque rayonnement horizontal est émis par une source d'émission lumineuse montée de manière pendulaire sur un point fixe par rapport audit capteur linéaire optique.
- chaque rayonnement horizontal est émis par une source d'émission lumineuse montée en position fixe par rapport audit capteur linéaire optique et est réfléchi, diaphragmé ou focalise par un organe correspondant avant d'illuminer ledit capteur linéaire optique.
- ledit organe est un miroir ou organe réfléchissant analogue monté à pivotement autour d'un axe fixe par rapport à ladite source et par rapport audit capteur linéaire optique.
- ledit organe est un cache comportant au moins une fente de définition d'image monté à pivotement autour d'un axe fixe par rapport à ladite source et par rapport audit capteur optique.
- ledit cache comporte deux fentes de définition d'image.
- ledit cache est en forme de boîte comportant deux fentes disposées sur deux faces distinctes de la boîte.
- le cache est suspendu par un montage à la Cardan, avec deux degrés de liberté en pivotement,
- chaque rayonnement sensiblement horizontal est émis par une source d'émission lumineuse montée à l'extrémité d'une bande souple permettant le pivotement, dont l'autre extrémité est encastrée en position fixe par rapport audit capteur linéaire optique.
- ledit organe correspondant est fixé sur une lame résiliente flexible encastrée à une extrémité en position fixe par rapport audit capteur linéaire optique et portant à son autre extrémité une masselotte de lestage.
- le dispositif comporte quatre capteurs linéaires optiques disposés chacun dans un boîtier et deux inclinomètres à double axe disposés dans deux boîtiers diagonalement opposés, de manière à minimiser le nombre total de capteurs utilisés.

Le dispositif selon l'invention est défini dans la revendication indépendante 1. Les modes particuliers de réalisation de l'invention sont définis dans les revendications dépendantes 2 à 23.

L'invention sera mieux comprise grâce à la description qui va suivre donné à titre d'exemple non limitatif en référence aux dessins annexés dans lesquels :

Les figures 1A et 1B représentent schématiquement et respectivement une vue en perspective et en vue de dessus d'un agencement de quatre boîtiers ou têtes de mesure selon l'invention.

Les figures 2A et 2B représentent schématiquement et respectivement une vue en perspective et en vue de dessus d'un autre agencement de quatre boîtiers ou têtes de mesure selon l'invention.

Les figures 3A et 3B représentent schématiquement et respectivement une vue en perspective et en vue de dessus d'un autre agencement de quatre boîtiers selon l'invention.

Les figures 4A et 4B représentent schématiquement et respectivement une vue en perspective et en vue de dessus d'un autre agencement de quatre boîtiers selon l'invention.

Les figures 5A et 5B représentent schématiquement et respectivement une vue en perspective d'un boîtier ou tête de mesure unique et une vue de dessus d'un agencement de quatre boîtiers conformes à la figure 5A.

Les figures 6A et 6B représentent schématiquement et respectivement une vue en perspective et une vue de dessus d'un montage de quatre bras de mesure selon l'invention sur un véhicule.

Les figures 7A et 7B représentent schématiquement et respectivement une vue en perspective et une vue de dessus d'un autre montage de quatre bras de mesure selon l'invention sur un véhicule.

Les figures 8A et 8B représentent schématiquement et respectivement une vue en perspective et une vue de dessus d'un autre montage de quatre bras de mesure selon l'invention sur un véhicule.

Les figures 9A et 9B représentent schématiquement et respectivement une vue en perspective et une vue de dessus d'un autre montage de quatre bras de mesure selon l'invention sur un véhicule.

La figure 10 représente schématiquement en vue de dessus un exemple de dispositif de mesure selon l'invention.

Les figures 11A et 11B représentent schématiquement et respectivement une vue de dessus et une vue en perspective d'un autre boîtier ou tête de mesure de dispositif selon l'invention.

Les figures 12A et 12B représentent schématiquement et respectivement une vue en perspective et une vue de dessus d'un autre boîtier ou tête de mesure de dispositif selon l'invention.

La figure 12C représente schématiquement et respectivement une vue en élévation de face et latérale d'un pendule de dispositif selon les figures 12A et 12B.

Les figures 13A et 13B représentent schématiquement et respectivement en perspective et en vue de dessus un agencement de mesure selon l'invention.

Les figures 14A et 14B représentent schématiquement et respectivement en perspective et en vue de dessus un autre agencement de mesure selon l'invention.

Les figures 15A et 15B représentent schématiquement et respectivement en vue de dessus et en perspective un autre agencement de mesure selon l'invention.

Les figures 15C à 15E représentent schématiquement et respectivement en vue de dessus, en perspective et en coupe diagonale un autre agencement de mesure selon l'invention.

Les figures 16A et 16B représentent schématiquement en vue de dessus et en perspective un exemple d'agencement de mesure selon l'invention.

Les figures 17A et 17B représentent schématiquement en vue de dessus et en perspective un autre exemple d'agencement de mesure selon l'invention.

Les figures 18A et 18B représentent schématiquement en vue de dessus et en perspective un autre exemple d'agencement de mesure selon l'invention.

La figure 19 représente schématiquement un exemple de montage réfléchissant pour la détermination d'angles verticaux selon l'invention.

Les figures 20A et 20B représentent schématiquement un autre exemple de détermination d'angles verticaux selon l'invention.

La figure 21 représente schématiquement en coupe verticale un principe de détermination d'angles verticaux.

La figure 22 représente schématiquement en vue de dessus un agencement préféré de quatre boîtiers selon l'invention.

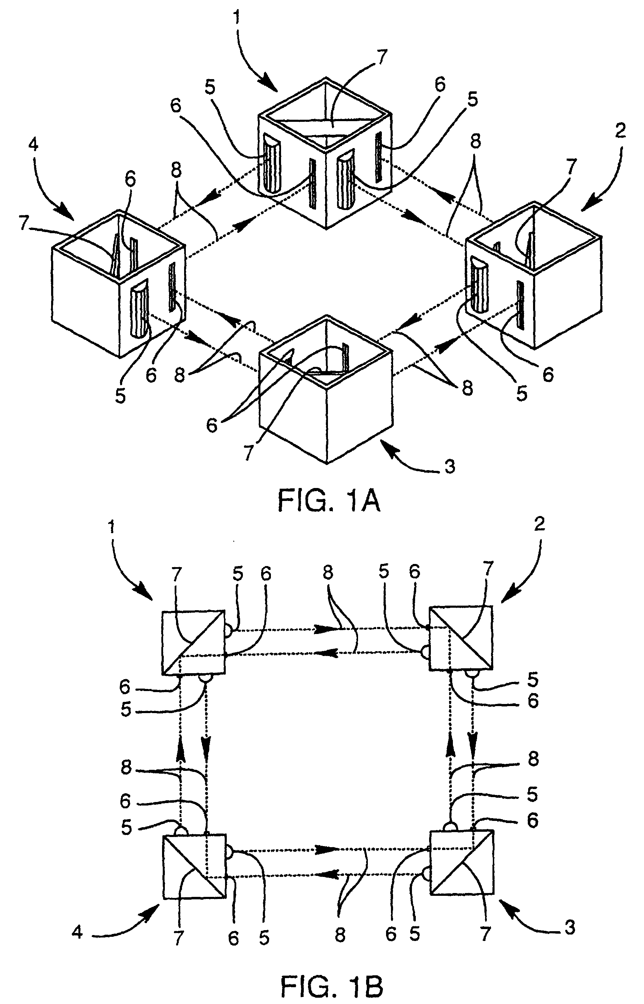

En référence aux figures 1A et 1B, un dispositif de contrôle géométrique comprend quatre boîtiers 1 à 4, éventuellement identiques pour des économies de fabrication, destinés à être montés chacun sur une roue d'un véhicule automobile au moyen de griffes de type connu en soi non représentées et à communiquer avec une centrale de calcul et de commande non représentée.

Chaque boîtier 1 à 4 de forme sensiblement cubique comporte au moins une source 5 de rayonnement lumineux et au moins un moyen 6 de définition d'image, du genre fente, lentille cylindrique ou équivalent apte à former une image de la source sur un capteur 7 approprié du genre CCD (capteur à couplage de charges), PSD (capteur sensible à la position) ou équivalent. Dans cet exemple, chaque boîtier 1 à 4 comporte deux sources 5 d'émission lumineuse et deux moyens 6 de définition d'image.

Cette disposition permet ainsi avec un seul capteur 7 de détecter deux rayonnements lumineux horizontaux 8. Dans la position d'étalonnage représentée aux figures 1A et 1B, chaque capteur 7 est par exemple frappé au même point par les deux rayonnements lumineux 8 incidents lorsque les boîtiers 1 à 4 sont disposés aux sommets d'un rectangle : cette disposition assure un étalonnage des angles droits. Dans une position de mesure et de contrôle de la géométrie d'un véhicule (non représentée), chaque capteur 7 est généralement frappé en des points distincts par des rayonnements lumineux 8 incidents.

En outre, dans le cas de véhicules présentant des décalages de roue (setback) très faibles, ce décalage de roue apparaît immédiatement sur les capteurs optiques 7 comme quantité proportionnelle à l'écartement des deux tâches lumineuses formées sur les capteurs 7 et inversement proportionnelle au cosinus de l'angle formé par le capteur linéaire 7 avec l'axe optique du faisceau 8 incident.

Chaque capteur 7 est orienté de préférence parallèlement à un plan diagonal du boîtier 1 à 4 correspondant, mais cette disposition n'est pas impérative : l'invention s'étend également au cas où les capteurs 7 sont orientés selon des angles différents avec les directions des rayonnements lumineux 8.

Ce premier dispositif selon l'invention est qualifié de "régulier" et présente une configuration dans laquelle chaque rayonnement lumineux 8 efficace ne croise aucun autre rayonnement lumineux 8 efficace en dehors des boîtiers 1 à 4.

Avantageusement, les deux fentes 6 ou moyens de définition d'image d'un même boîtier 1 à 4 présentent une largeur différente et permettent d'identifier la provenance du rayonnement lumineux 8 dont l'image est formée sur le capteur optique 7. Ce mode de discrimination a été décrit dans la demande de brevet français FR 2.711.238 au nom du déposant de la présente demande.

Alternativement, l'émission de deux sources lumineuses 5 dont les images sont formées sur un même capteur optique 7 est discriminée temporellement en utilisant un séquençage. Dans le mode de réalisation représenté, deux étapes sont nécessaires à cet effet : à une première étape, on fait émettre toutes les sources lumineuses 5 les plus intérieures au dispositif (parcours intérieur d'émission dans le sens de circulation anti-horaire) et, à une deuxième étape, on fait émettre toutes les sources lumineuses 5 les plus extérieures au dispositif (parcours extérieur d'émission dans le sens de circulation horaire).

Du fait de la disposition représentée, la somme des angles d'orientation horizontaux est égale à six angles plats (6 π en radians), le programme de commande et de calcul vérifie continûment cette somme et signale toute anomalie en cas d'erreur de sommation. Le programme permet également la mise en mémoire des erreurs systématiques dues au dispositif lui-même (orthogonalité des capteurs) et le déclenchement de procédures spécifiques liées aux erreurs dues au véhicule : contrôle de l'évolution des paramètres d'un véhicule donné par comparaison avec les paramètres de la banque de données relatifs à ce véhicule, contrôle de l'évolution des paramètres d'un véhicule donné par comparaison avec les paramètres de la banque de données relatifs à ce véhicule, contrôle de l'évolution des paramètres d'un véhicule donné par comparaison avec la famille des véhicules du même type et appel automatique du constructeur sur dépassement des tolérances de fabrication.

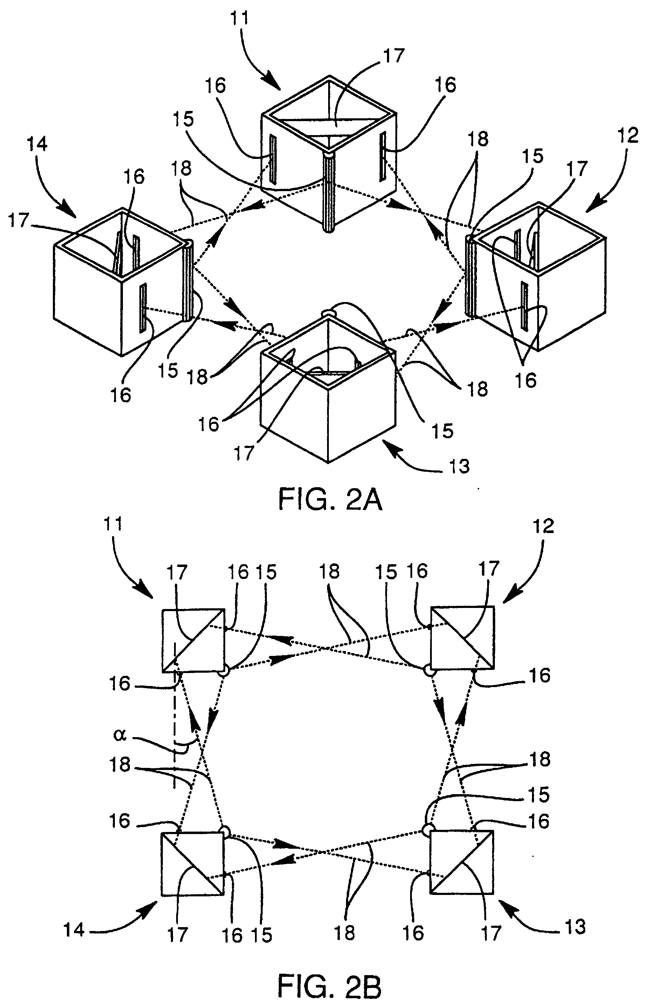

En référence aux figures 2A et 2B, un autre mode de réalisation de l'invention comporte un dispositif comportant quatre boîtiers 11 à 14.

Chaque boîtier de mesure 11 à 14 comporte une source unique d'émission lumineuse 15 et au moins deux moyens 16 de définition d'image. Ce deuxième dispositif selon l'invention est qualifié de "croisé" par référence au croisement des axes optiques des rayonnements lumineux 18 venant frapper les capteurs optiques 17.

La discrimination des rayons lumineux 18 peut être réalisée du fait que les rayonnements lumineux 18 viennent frapper le capteur optique linéaire 17 correspondant en des points distincts séparés d'une distance supérieure à la distance séparant une source d'émission lumineuse 15 d'une fente 16 d'un même boîtier 11 à 14. On peut également effectuer une discrimination temporelle ou géométrique (différentes largeurs de fentes).

Dans la disposition d'étalonnage représentée aux figures 2A et 2B, chaque capteur 17 est frappé par deux rayonnements lumineux 18 en deux points distincts lorsque les boîtiers 1 à 4 sont disposés aux sommets d'un rectangle. Par contre, les parcours d'émission lumineuse dans le sens horaire et dans le sens anti-horaire sont décalés par rapport au rectangle de positionnement des boîtiers 11 à 14 d'angles négatifs de valeur αᵢ (i = 1 à 4) et d'angles positifs de valeur αᵢ (i = 1 à 4) , respectivement (le sens positif choisi pour les angles est, par convention le sens anti-horaire). Ces angles αᵢ sont variables et dépendent de la voie et de l'empattement. pour éliminer ces angles parasites de la mesure, on mesure les voies et les empattements et on calcule les angles αᵢ par la formule : αᵢ = Arctg (a/bᵢ), où a est la distance de la fente correspondante à la source lumineuse, et bᵢ est la voie ou l'empattement correspondant au sens de la mesure : transversal ou longitudinal, gauche ou droit.

Dans cet exemple, chaque capteur linéaire 17 est parallèle à un plan diagonal du cube géométrique de chaque boîtier 11 à 14. Bien entendu, toute autre orientation fonctionnelle des capteurs 17 ne sort pas du cadre de la présente invention : en particulier, chaque capteur linéaire 17 peut avantageusement être orienté parallèlement à un plan orthogonal à la diagonale d'un rectangle présentant les dimensions usuelles d'un véhicule.

Pour éviter les interférences optiques, on peut discriminer temporellement les rayonnements lumineux par un séquençage à deux étapes : dans une première étape, les sources 15 d'émission lumineuse diagonalement opposées sont actives et , dans une deuxième étape, les autres sources 15 d'émission lumineuse situées sur l'autre diagonale sont actives.

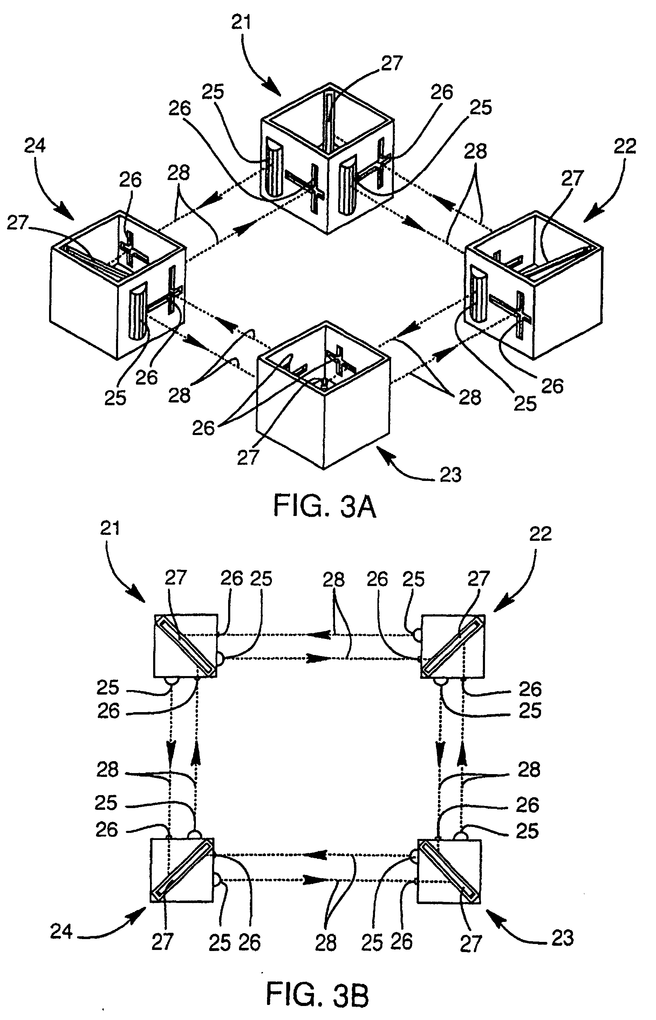

En référence aux figures 3A et 3B, un autre dispositif selon l'invention comporte quatre boîtiers 21 à 24. Chaque boîtier 21 à 24 comporte deux sources d'émission lumineuse 25, deux moyens de définition d'image 26 et un capteur linéaire optique 27. La disposition générale est de type "régulier" avec une configuration d'axes optiques efficaces analogue à celle des figures 1A et 1B, ce qui entraîne les mêmes avantages opératoires que ceux présentés par les figures 1A et 1B.

Dans cet exemple, chaque moyen 26 de définition d'image présente une forme en croix (par exemple une fente en croix formée par deux fentes perpendiculaires), de manière à fournir les altitudes relatives des différents boîtiers 21 à 24 et déterminer par la méthode des moindres carrés un plan géométrique sensiblement horizontal de référence de calcul pour déterminer les angles du plan horizontal. La méthode d'évaluation d'altitude relative et l'utilisation d'un moyen de définition d'image en forme de croix ont déjà été décrites dans le document FR 2.711.238 au nom du demandeur de la présente demande.

Dans cet exemple, chaque capteur linéaire optique 27 est placé dans le plan de symétrie du cube géométrique de chaque boîtier 21 à 24 et est incliné par rapport à l'horizontale d'un certain angle, de manière à augmenter la définition et la précision de la mesure, de manière connue en soi.

Pour la discrimination des rayonnements lumineux 28, on utilise à la fois la différence des largeurs des fentes horizontales et des fentes verticales et le séquençage temporel en deux étapes décrit en référence aux figures 1A et 1B.

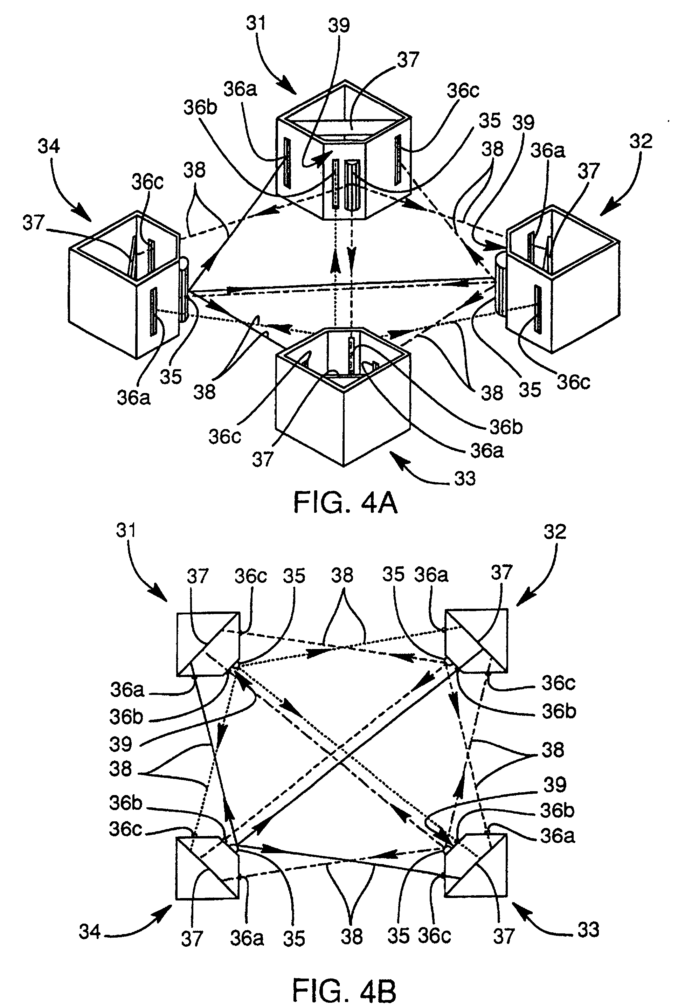

En référence aux figures 4A et 4B, un autre dispositif de contrôle géométrique comporte quatre boîtiers 31 à 34.

Chaque boîtier de mesure 31 à 34 comporte une source d'émission lumineuse 35 unique, trois moyens de définition d'image 36 constitués chacun de préférence par trois fentes verticales 36a, 36b et 36c, ainsi qu'un capteur optique linéaire 37. Cet autre dispositif selon l'invention est de type "croisé" avec une configuration d'axes optiques efficaces comprenant celle décrite en référence aux figures 2A et 2B, ce qui entraîne les mêmes avantages opératoires que ceux présentés par les figures 2A et 2B (discrimination des rayonnements lumineux 38 réalisée par construction, en particulier).

Dans cet exemple, les fentes verticales 36b sont disposées sensiblement selon les diagonales de la configuration de travail de montage sur un véhicule standard. Cette disposition avantageuse assure une précision supplémentaire en permettant des sommations intermédiaires "triangulaires" faisant intervenir uniquement trois capteurs, des sommations périphériques et des sommations croisées selon un parcours en forme de Z. Les corrections effectuées peuvent ainsi être attribuées à chaque boîtier 31 à 34, individuellement de manière que le programme de commande du dispositif garde en mémoire les paramètres individuels de chaque boîtier utilisables pour le calcul et vérifie la permanence de ces paramètres individuels pour déterminer s'il est nécessaire de réviser la structure, remplacer des composants électroniques ou étalonner les fonctions de transfert d'un boîtier 31 à 34.

De manière avantageuse, chaque boîtier 31 à 34 présente une forme sensiblement cubique présentant une troncature plane 39 du côté intérieur. Le plan 39 ainsi défini sert de support à la source d'émission lumineuse 35 et à la fente 36b orientée diagonalement et verticalement.

De préférence, la discrimination des rayonnements lumineux est effectuée par séquençage temporel à quatre étapes dans lequel, à chaque étape, une seule source d'émission lumineuse est active. Lorsqu'on effectue un bilan rapide aux fins de vérification de la géométrie du véhicule, on utilise un séquençage temporel simplifié à deux étapes : dans la première étape, deux sources 35 situées sur une même diagonale sont actives tandis que, dans la deuxième étape, les deux autres sources situées sur l'autre diagonale sont actives. Cependant, dans ce mode simplifié de séquençage, il est nécessaire d'effectuer un programme de vérification et de tri de huit mesures parmi douze mesures pour déterminer les sources d'émission correspondantes et éliminer les erreurs de discrimination de taches résultant de l'impossibilité de distinguer la source d'émission 35 à l'origine d'une image parmi trois formées sur le capteur linéaire optique 37 d'un boîtier 31 à 34. Cette élimination est rendue possible en prenant comme références primaires les axes optiques correspondant aux diagonales passant par les fentes 36b.

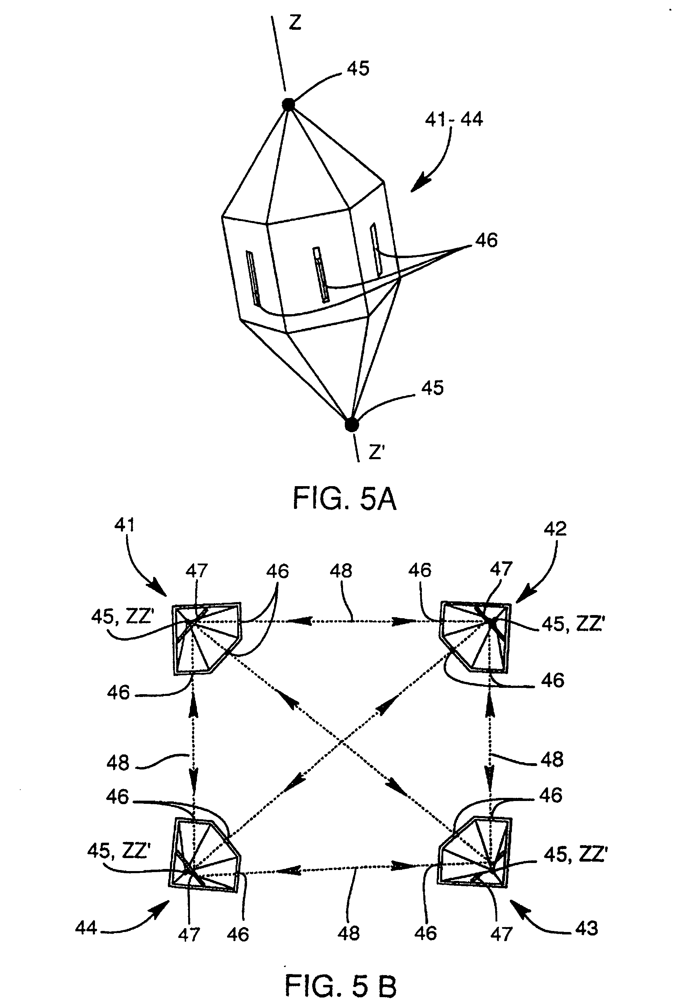

En référence aux figures 5A et 5B, un autre dispositif selon l'invention comporte quatre boîtiers 41 à 44. Chaque boîtier 41 à 44 comporte deux sources d'émission lumineuse 45, trois fentes 46 ou moyens de définition d'image et un capteur linéaire optique 47 recevant des faisceaux de rayonnement lumineux 48.

Chaque boîtier 41 à 44 comporte trois facettes planes dans chacune desquelles est pratiquée une fente 46. Les plans verticaux perpendiculaires à ces facettes et passant par les trois fentes 46 de chaque boîtier se rencontrent sensiblement suivant un axe vertical ZZ' sur lequel sont positionnées les deux sources d'émission lumineuse 45 de part et d'autre des fentes 46. Le capteur linéaire optique 47, orienté de manière à recevoir les rayonnements 48 passant par les trois fentes correspondantes peut être placé légèrement en avant de l'axe ZZ', de manière à réduire la probabilité d'intersection et d'interférence des faisceaux lumineux incidents 48 en position d'étalonnage représentée à la figure 58. Ainsi, en plaçant les boîtiers en position d'étalonnage aux sommets d'un rectangle, les sources lumineuses 45 sont placées exactement aux sommets de ce rectangle : cette disposition présente l'avantage par rapport au mode de réalisation des figures 4A et 4B d'éliminer les déports de source lumineuse qui introduisent des corrections de distances et d'angles en fonction des distances de séparation entre les boîtiers de mesure.

Les deux sources 45 d'émission lumineuse séparées fournissent deux images séparées ou confondues sur le capteur optique 47 linéaire d'un autre boîtier. En effectuant la moyenne des positions des deux images obtenues, on obtient une mesure par rapport à l'axe optique moyen qui est indépendante des degrés de verticalité respectifs des boîtiers des sources 45 et du boîtier contenant le capteur optique linéaire 47. Ainsi, ce mode de réalisation de l'invention présente l'avantage d'éviter des corrections de verticalité et fournit sans aucun calcul correctif des valeurs ramenées au plan médiateur passant au milieu de chaque segment d'axe ZZ' de chaque boîtier reliant les deux sources lumineuses 45 correspondantes.

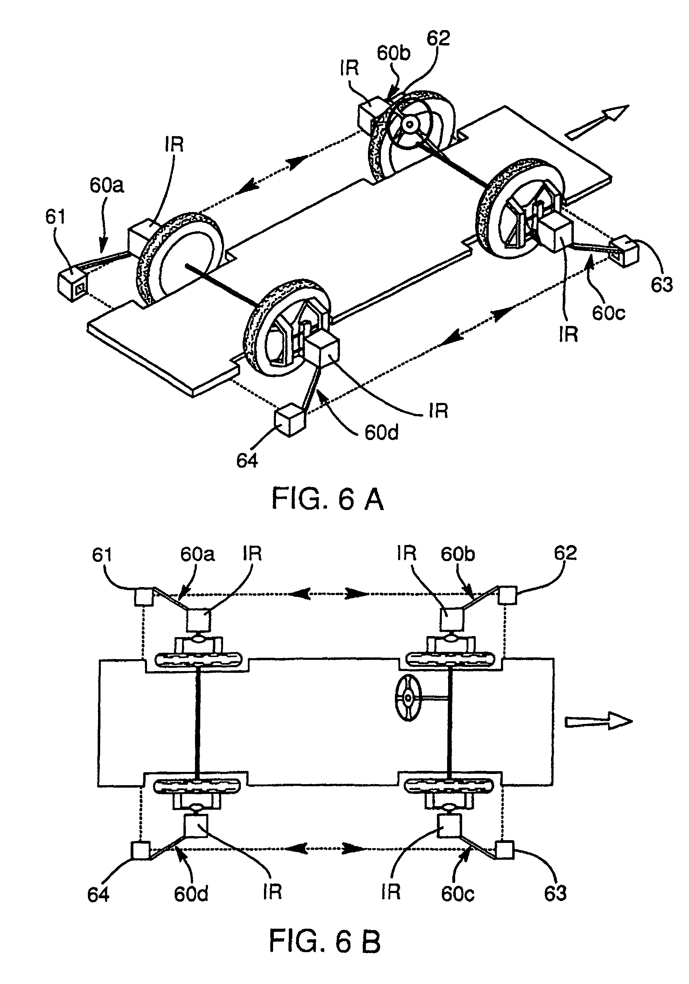

En référence aux figures 6A et 6B, un dispositif de contrôle géométrique de véhicule à roues est représenté en position montée sur un véhicule représenté sans carrosserie.

Le dispositif comporte une unité centrale de commande et de calcul non représentée raccordée par des moyens de communication à des bras de mesure 60a, 60b, 60c, et 60d. Des moyens de communication redondante peuvent comprendre deux bornes de transmission : bien entendu, l'invention s'applique à toute autre organisation du schéma de communication par liaison filaire ou sans fil (radio, rayonnement infrarouge, transmission sonore).

Chaque bras de mesure 60a à 60d comporte d'une part un boîtier IR fixé par une griffe sur la roue et contenant des circuits d'un inclinomètre I et de potentiomètre R qui coopèrent avec des boîtiers 61 à 64 placés à l'extrémité des bras 60a à 60d, lesquels s'étendent vers l'extérieur du véhicule en avant des roues avant et en arrière des roues arrière. Chaque boîtier 61 à 64 disposé respectivement à l'extrémité d'un support rigide d'un bras de mesure 60a à 60d est un boîtier muni d'un récepteur optique multidirectionnel et d'une source d'émission lumineuse multidirectionnelle ou de deux sources d'émission lumineuse unidirectionnelle, du type décrit précédemment en référence aux figures 1A à 3B.

On dispose dans chaque boîtier 61 à 64 le récepteur optique, notamment un capteur du genre CCD, selon une direction faisant sensiblement un angle de 45° dans le plan horizontal avec l'axe longitudinal du véhicule. Cette disposition avantageuse permet ainsi d'économiser lors de la fabrication du dispositif quatre capteurs optiques (du genre CCD) et les électroniques associées. La discrimination des mesures dans le sens transversal et des mesures dans le sens longitudinal est réalisée simplement, par exemple, en adoptant un masque transversal comportant des fentes de largeur notablement différente de la largeur des fentes du masque longitudinal disposé sur une autre face du cube correspondant à la conformation d'un boîtier 61 à 64. La discrimination des rayons lumineux incidents au moyen de fentes de largeur différente a été décrite en particulier dans la demande de brevet français FR 2.711.238.

Les boîtiers 62 et 63 sont montés espacés transversalement et longitudinalement des roues selon une distance transversale prédéterminée pour que le faisceau lumineux longitudinal en provenance du boîtier 62 ne soit pas coupé par le pneumatique de la roue gauche lors d'un braquage à droite et pour que le faisceau lumineux longitudinal en provenance du boîtier 63 ne soit pas coupé par le pneumatique de la roue droite lors d'un braquage à gauche et également, de manière connue en soi, selon une distance longitudinale correspondant sensiblement à la longueur du support rigide d'un bras de mesure suffisante pour que chaque faisceau lumineux transversal ne soit pas coupé par les pneumatiques avant ou arrière des roues correspondantes ou ne rencontre pas un organe du genre spoiler, pare-chocs, etc. Grâce à cette variante de dispositif selon l'invention, le braquage pour la mesure des angles de chasse et de pivot est effectué sans difficulté pour des valeurs de braquage de 10° ou de 20°.

Selon une variante moins avantageuse de l'invention les sources d'émission lumineuse des boîtiers 61 à 64 n'émettent pas toutes simultanément, mais émettent, au contraire, séquentiellement : dans ce cas, il est possible d'adopter des largeurs de fente identiques pour les fentes transversales et longitudinales, en raison du fait que la discrimination est temporelle et non géométrique. De préférence, dans les deux cas, les boîtiers 61 à 64 sont disposés vers le bas par rapport à l'axe de la roue de sorte que le boîtier IR contenant un ou plusieurs inclinomètre(s) I et le potentiomètre R ne constitue pas un obstacle aux communications lumineuses entre bottiers, aussi bien en position de direction centrée qu'en position de braquage maximal à droite ou à gauche. Comme on le verra ci-après, l'invention couvre également le cas où les inclinomètres I sont contenus dans les boîtiers 61 à 64.

Cette variante de réalisation est préférée dans le cas où le véhicule à contrôler est placé sur ou à proximité d'un pont de levage auxiliaire susceptible d'interrompre les faisceaux lumineux actifs.

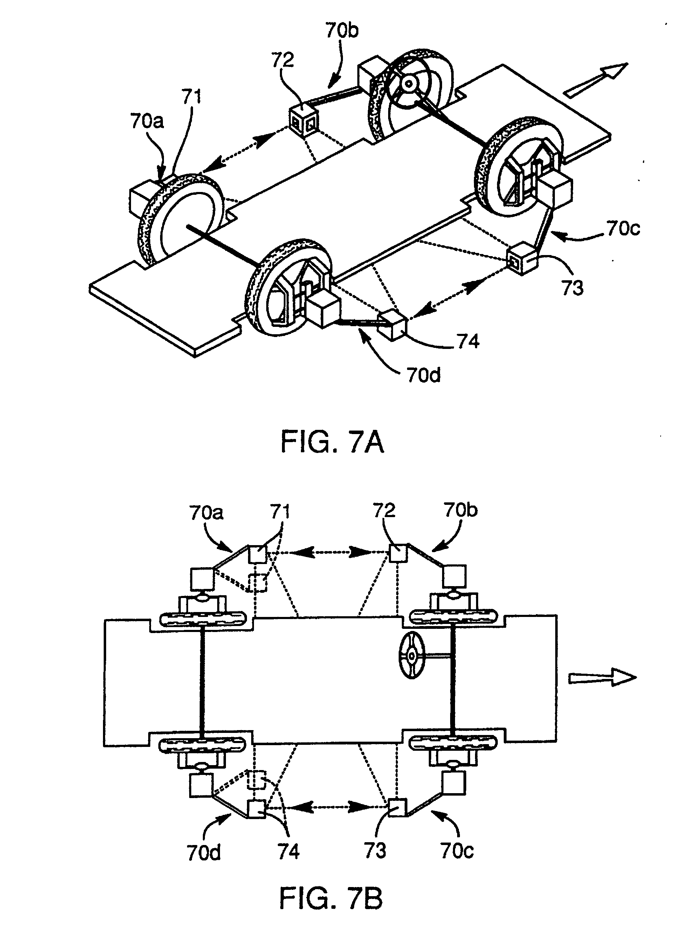

En référence aux figures 7A et 7B, une autre variante de dispositif selon l'invention comporte des bras 70a à 70d disposés vers l'intérieur du véhicule, au bout desquels sont disposés des boîtiers 71 à 74 aptes à communiquer optiquement entre eux ou à effectuer des mesures géométriques non seulement angulaires mais également des mesures de distance selon au moins une diagonale du quadrilatère défini par les boîtiers 71 à 74 analogues aux boîtiers décrits en référence aux figures 4A à 5B.

Le document FR 2.711.238 décrit le principe général des mesures dimensionnelles pouvant être obtenues à l'aide d'un boîtier à plusieurs fentes.

Connaissant ce principe de mesure physique, l'homme du métier effectuera par de simples calculs géométriques la détermination des distances entre les boîtiers et obtiendra ainsi non seulement des caractéristiques de parallélisme, mais également des caractéristiques de voie et d'empattement du véhicule permettant en particulier de contrôler les caractéristiques dimensionnelles des essieux ou la bonne fixation des roues aux essieux du véhicule.

De préférence, les bras 70a à 70d sont disposés de telle sorte que les boîtiers 71 à 74 soient disposés à l'intérieur des roues du véhicule dans le sens longitudinal, mais extérieurement transversalement.

On peut éventuellement comme représenté en traits pointillés pour les boîtiers 71 et 74 solidaires des roues arrière du véhicule, disposer les bras 70a à 70d de telle sorte que les boîtiers soient disposés à la fois intérieurement longitudinalement et intérieurement transversalement : cette disposition réduit encore la taille du quadrilatère défini par les boîtiers et augmente d'autant la précision de mesure, en particulier de mesure dimensionnelle.

Cette disposition est utilisée pour tous les boîtiers 71 à 74 lorsque l'on dispose d'un pont élévateur comportant des plaques de support de roues surélevées de manière à ménager un passage des chemins de communication lumineuse entre boîtiers sous le véhicule ou alternativement, pour le passage des boîtiers eux-mêmes.

Pour passer d'une position de boîtier 71 ou 74 représentée en traits pointillés à une position de boîtier 71 ou 74 représentée en traits pleins, on prévoit un montage amovible de boîtier 71 ou 74 de façon à pouvoir tourner de 90° ou de 180°, de manière à présenter toujours une face de réception optique active lors du montage d'un dispositif selon l'invention à l'aide d'éléments modulaires comportant des blocs sensiblement cubiques déconnectables, verrouillables, encliquetables ou détachables mécaniquement et électriquement d'un support rigide ou d'un support de connexion : l'homme du métier déterminera sans difficulté les montages mécaniques permettant de présenter le boîtier de manière à réaliser une communication optique avec un autre boîtier en regard.

Grâce à cette construction modulaire de boîtiers enfichables avec ou dans des bras-support 70, il est possible de construire un grand nombre de quadrilatères à l'aide de ces modules et de passer en particulier d'un montage représenté aux figures 6A à 9B à un autre montage quelconque représenté à ces figures. En raison du fait que chaque boîtier peut occuper trois positions différentes, les positions vers l'intérieur du véhicule engendrent dix quadrilatères différents, dont deux sont sensiblement voisins d'un parallélogramme, deux sensiblement voisins d'un trapèze et deux autres sensiblement voisins d'un rectangle, et on constate qu'il existe au moins quatre autres quadrilatères correspondant à au moins une position extérieure d'un boîtier. Par conséquent, il existe au moins dix quadrilatères aptes à être construits à l'aide de boîtiers modulaires par simple encliquetage mécanique et électrique simultané, ce qui permet, sur un véhicule donné, de mesurer avec une très grande précision, en corrélant les erreurs éventuelles, les caractéristiques des roues du véhicule.

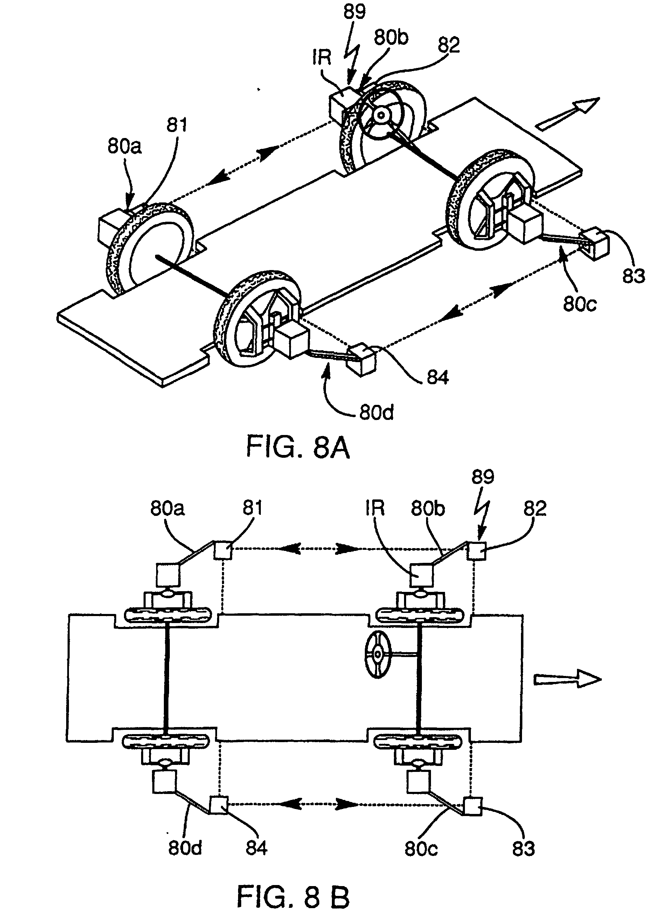

En référence aux figures 8A et 8B, un autre dispositif de contrôle géométrique est représenté en position montée sur un véhicule représenté sans carrosserie.

Le dispositif comporte une unité centrale de commande et de calcul non représentée raccordée par des moyens 89 de communication sans fil au bras avant gauche 80b portant le boîtier 82. Entre les bras 80a à 80d, les communications s'effectuent par transmission sans fil, de préférence de type optique, selon des chemins de transmission sensiblement voisins des axes optiques efficaces de mesure géométrique.

Les boîtiers 81 à 84 sont placés en avant des roues avant et en avant des roues arrière de sorte que leur espacement longitudinal gauche ou droit est sensiblement égal à l'empattement gauche ou droit du véhicule en cours de contrôle. Cette disposition libère ainsi tout l'espace à l'arrière des roues arrière pour d'autres interventions ponctuelles de contrôle de carrosserie, d'échappement, de réparations ponctuelles ou d'opérations de maintenance rapide.

De préférence, le moyen de communication sans fil 89 reliant l'unité centrale de commande et de calcul au bras avant gauche 80b est un moyen de communication hertzienne avec un protocole de transmission adapté par exemple du type BUS CAN (marque de la Société de droit néerlandais PHILIPS) ou du type LON WORK (marque de la Société de droit américain ECHELON).

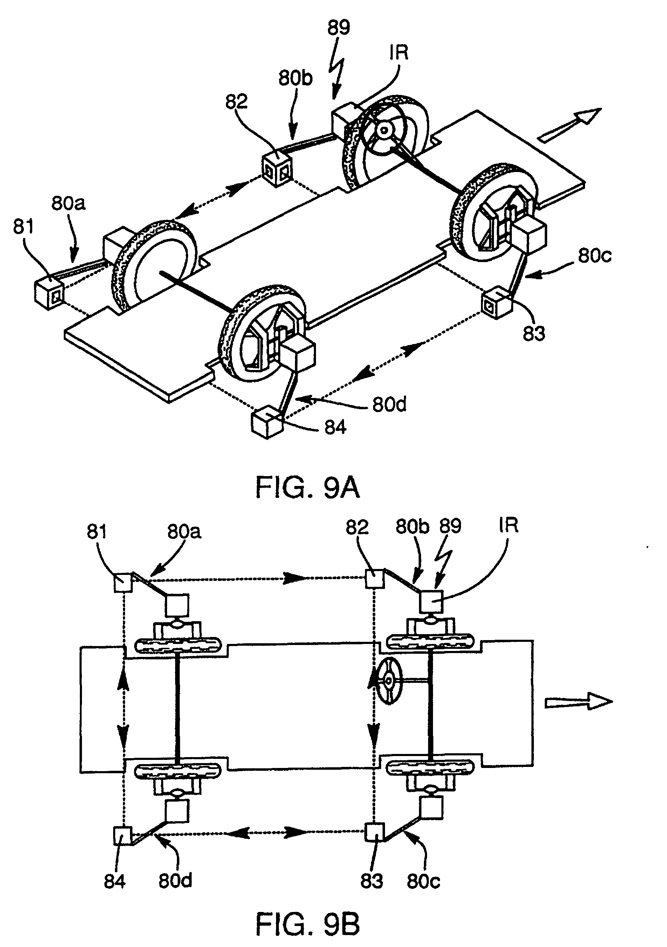

En référence aux figures 9A et 9B, un autre montage de dispositif de contrôle géométrique est représenté en position montée sur un véhicule représenté sans carrosserie.

Le dispositif comporte une unité centrale de commande et de calcul non représentée raccordée par des moyens 89 de communication filaire au bras avant gauche 80b portant le boîtier 82. Entre les bras 80a à 80d, les communications s'effectuent par transmission sans fil, de préférence de type optique, selon des chemins de transmission sensiblement voisins des axes optiques efficaces de mesure géométrique.

Les boîtiers 81 à 84 sont placés en arrière des roues avant et en arrière des roues arrière de sorte que leur espacement longitudinal gauche ou droit est sensiblement égal à l'empattement gauche ou droit du véhicule en cours de contrôle. Cette disposition libère ainsi tout l'espace à l'avant des roues avant pour d'autres interventions ponctuelles de contrôle de carrosserie d'échappement, de réparations ponctuelles ou d'opérations de maintenance rapide et permet de contrôler des véhicules munis de spoilers à l'avant.

De préférence, le moyen de communication filaire 89 reliant l'unité centrale de commande et de calcul au bras avant gauche 80b est un moyen de communication par câble avec un protocole de transmission adapté par exemple du type BUS CAN (marque de la Société de droit néerlandais PHILLIPS) ou du type LON WORK (marque de la Société de droit américain ECHELON).

Selon un premier mode de commande applicable à tous les dispositifs faisant l'objet.de la présente demande, les dispositifs comportent des moyens de démarrage à distance et de transfert d'informations en provenance d'une banque de données : ces moyens de démarrage à distance permettent de laisser l'unité centrale en position active, même en l'absence de véhicule, ce qui permet à un client désirant prendre un rendez-vous de téléphoner directement à l'unité centrale en fournissant au moyen d'un code personnalisé des références client et véhicule, de sorte que, à l'arrivée du client dans son véhicule, le dispositif peut démarrer automatiquement des opérations de bilan ou de réglage sans aucune perte de temps nécessitée par la prise d'informations ou l'identification du véhicule ; également, en cas de doute, le téléchargement permet de saisir à distance des informations en provenance d'une banque de données d'un constructeur automobile pour saisir des défauts caractéristiques d'un type de véhicule donné ; enfin, le dispositif peut comporter un sous-programme de gestion du temps de travail permettant d'effectuer le démarrage à distance à une heure prédéterminée et l'arrêt du travail à une heure prédéterminée, de sorte que l'utilisation du dispositif est entièrement gérée à distance en évitant ainsi tout risque d'utilisation frauduleuse.

Selon un deuxième mode de commande applicable à l'invention, les dispositifs comportent des moyens de télédiagnostic ou de télémaintenance, pour la prise d'informations sur l'état du dispositif par des moyens techniques de télécommunication (téléphone, télécopie, télex, télétexte, interrogation et commande vocale) ou pour la fourniture d'instructions de dépannage ou de réglage afin de remédier à une anomalie particulière référencée par la banque de données du constructeur du dispositif : ces moyens de télédiagnostic ou de télémaintenance peuvent comporter également des moyens télématiques ou des mémoires de masse interactives du type CD-ROM ou CDI (compact disque interactif).

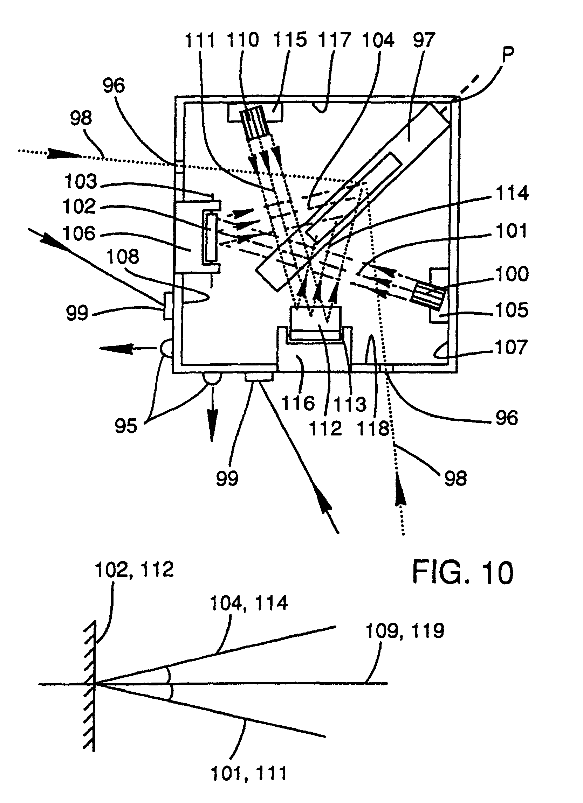

En référence à la figure 10, un mode de réalisation préféré de boîtier de mesure et de contrôle géométrique présente une forme sensiblement cubique avec deux sources d'émission lumineuse 95 ; deux fentes ou moyens 96 de définition d'image et un capteur optique linéaire unique 97 sur lequel sont formées des images produites par des rayonnements lumineux incidents 98 sensiblement horizontaux.

Deux cellules photolumineuses 99 remplissent à la fois la fonction de transmission sans fil par rayonnement infrarouge des données et des informations de commande et d'état et la fonction de déclenchement de la synchronisation de la mesure effectuée par le capteur linéaire optique 97 avec l'émission d'un rayonnement incident 98. Ainsi, l'ouverture de la fenêtre de lecture d'un angle mesuré apte à servir aux calculs de parallélisme est déclenchée automatiquement par la détection du signal de mesure lumineux 98 incident sur une cellule photolumineuse 99, tandis que la fermeture de la fenêtre de lecture est effectuée après acquisition, écoulement d'un intervalle de temps prédéterminé ou arrêt d'émission du signal de mesure 98 correspondant.

Chaque source d'émission lumineuse 95 est de préférence une source d'émission pouvant être commandée ou modulée de manière à émettre des signaux de mesure servant à la mesure proprement dite et des signaux de communication d'intensité lumineuse inférieure à l'intensité des signaux de mesure conformément à un protocole de communication prédéterminé : une source 95 adaptée est par exemple une diode électroluminescente émettant dans l'infrarouge.

Avantageusement, le capteur optique linéaire 97 est un capteur de type CCD (à couplage de charges) ou PSD (sensible à la position) pourvu d'un obturateur électronique, de manière à diminuer le temps d'ouverture. Ainsi, pour un signal de mesure donné, le capteur 97 présente une fenêtre d'ouverture de largeur temporelle réduite : cette disposition permet de diminuer la durée des éclairs ou émissions pulsées de mesure des sources 95 et de réduire la consommation de puissance instantanée consommée par la mesure.

Dans cette variante préférée de boîtier de mesure, un capteur optique linéaire 97 unique sert non seulement à la mesure des angles dans le plan horizontal pour déterminer les valeurs de parallélisme, mais également à la mesure de paramètres physiques pour déterminer les inclinaisons verticales, le carrossage, la chasse et le pivot de chaque roue du véhicule à contrôler.

A cet effet, on utilise des rayonnements de mesure incidents sur le capteur optique linéaire 97 qui sont orientés selon une direction sensiblement horizontale ou faisant un faible angle avec une direction sensiblement horizontale, de manière à orienter le capteur optique linéaire 97 selon une direction voisine de la verticale située à l'intérieur du plan de symétrie P du boîtier pour augmenter la précision de mesure. De préférence, la direction d'orientation du capteur 97 fait avec la verticale un angle compris entre 15 et 60 degrés angulaires.

Un premier paramètre physique est obtenu par la mesure du décalage vertical entre une position zéro correspondant à une position horizontale et une position mesurée correspondant à une inclinaison verticale. A cet effet, le boîtier de mesure contient une première source lumineuse 100 conformée de manière à produire un faisceau plat 101 selon une direction d'émission fixe par rapport à la face du boîtier portant la source 100, un premier miroir plan 102 monté de manière pendulaire autour d'un axe 103 monté fixe par rapport au boîtier de manière à réfléchir le faisceau plat lumineux 101 selon un faisceau plat réfléchi 104 de largeur prédéterminée qui illumine le capteur optique 97 en produisant une courbe d'intensité lumineuse dépendant de l'orientation spatiale de la face du boîtier portant la source lumineuse 100. Les supports 105, de la source lumineuse 100, et 106, de l'axe pendulaire 103, sont de préférence solidaires de deux parois 107, 108 opposées du boîtier sensiblement parallèles l'une à l'autre. Par calcul, on détermine finalement l'inclinaison du boîtier par rapport à un plan de référence horizontal 109 qui est le plan bissecteur du dièdre formé par les faisceaux plats 101 et 104 précités et on déduit ensuite l'inclinaison verticale du boîtier parallèlement à une première direction de plan prédéterminée.

Un deuxième paramètre physique est obtenu par la mesure du décalage entre une autre position zéro correspondant à une autre position horizontale et une position mesurée correspondant à une inclinaison verticale. A cet effet, le boîtier de mesure contient une deuxième source lumineuse 110 conformée de manière à produire un faisceau plat 111 selon une direction d'émission fixe par rapport à la face du boîtier portant la source 110, un premier miroir plan 112 monté de manière pendulaire autour d'un axe 113 monté fixe par rapport au boîtier de manière à réfléchir le faisceau plat lumineux 111 selon un faisceau plat réfléchi 114 de largeur prédéterminée qui illumine le capteur optique 97 en produisant une courbe d'intensité lumineuse dépendant de l'orientation spatiale de la face du boîtier portant la source lumineuse 110. Les supports 115 de la source lumineuse 110 et 116 de l'axe pendulaire 113 sont de préférence solidaires de deux parois 117, 118 opposées du boîtier sensiblement parallèles l'une à l'autre. Par calcul, on détermine finalement l'inclinaison du boîtier par rapport à un plan de référence horizontal 119 qui est le plan bissecteur du dièdre formé par les faisceaux plats 111 et 114 précités et on déduit ensuite l'inclinaison verticale du boîtier parallèlement à une deuxième direction de plan prédéterminée.

L'homme du métier sait, à partir de la connaissance de deux inclinaisons verticales par rapport à deux plans verticaux sécants prédéterminés, calculer les angles de carrossage, chasse, pivot, angle inclus et autres angles utiles pour la mesure et le contrôle de la géométrie des véhicules.

L'invention permet ainsi avec un seul capteur optique 97 de mesurer les paramètres physiques nécessaires à l'établissement de toutes les caractéristiques de géométrie d'un véhicule en utilisant exclusivement des rayonnements sensiblement horizontaux. Cette disposition procure une économie de fabrication importante en raison de la diminution du nombre de capteurs optiques 97 dont l'utilisation est nécessaire, et facilite également l'étalonnage du dispositif qui peut être effectué simultanément pour tous les angles, et non en plusieurs étapes séparées contrairement aux procédés d'étalonnage de l'art antérieur.

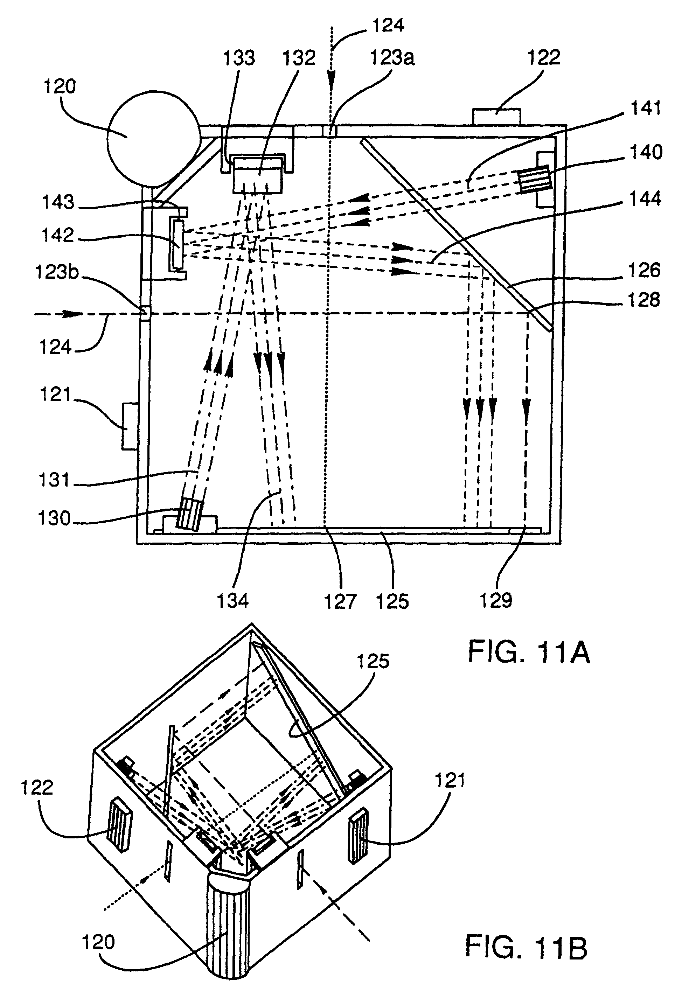

En référence aux figures 11A et 11B, une autre variante de réalisation de boîtiers de mesure selon l'invention comporte au moins une source lumineuse 120, des cellules photo détectrices 121 et 122 sensibles à un rayonnement lumineux en provenance d'un autre boîtier, des fentes 123 ou moyens de définition d'image propres à former une image d'un rayonnement horizontal 124 sur un capteur linéaire optique 125. L'image formée par un des rayonnements 124 arrive directement en 127 sur le capteur 125 par une fente 123, tandis que l'image formée en 129 par l'autre fente 123 est obtenue après réflexion en 128 sur un miroir plan 126 qui réfléchit cette image sur le capteur plan 125. De préférence, l'image directe sans réflexion sur le miroir plan 126 est une image de mesure dans le sens longitudinal du véhicule, tandis que l'image obtenue après réflexion sur le miroir plan 126 est une image de mesure dans le sens transversal.

Le boîtier contient également une première source lumineuse 130 émettant un faisceau sensiblement horizontal 131 venant frapper un miroir pendulaire 132 suspendu à un axe 133 pour réfléchir le faisceau plat 131 en un deuxième faisceau plat 134 qui vient frapper le capteur linéaire optique 125. Il en est de même en ce qui concerne la deuxième source lumineuse 140 engendrant un faisceau plat 141 venant se réfléchir sur un miroir 142 suspendu à un axe 143 pour réfléchir le faisceau plat lumineux 141 en un faisceau plat 144 afin de former une image sur le capteur linéaire 125. La différence consiste en la réflexion supplémentaire sur le miroir plan 126 avant de venir illuminer le capteur optique linéaire 125.

Un avantage de ce mode de réalisation consiste en la possibilité de pouvoir fixer le capteur linéaire optique 125 sur une face de la conformation cubique du boîtier en permettant ainsi une réduction importante de l'encombrement du boîtier et une facilité d'exécution en définissant par construction la face de référence portant le capteur linéaire optique 125. En outre, les images formées dans la conformation habituelle d'un véhicule sont toutes situées à des endroits espacés l'un de l'autre sur le capteur linéaire optique 125, de sorte qu'aucune confusion de signal de mesure n'est à redouter. Cette disposition physique assure ainsi une discrimination automatique des signaux et facilite l'écriture du programme de commande et de calcul du dispositif de mesure et de contrôle géométrique de véhicules.

Un autre avantage important est que tous les faisceaux incidents sont sensiblement perpendiculaires au capteur linéaire optique, ce qui évite toute réflexion parasite et toute perte d'intensité lumineuse indésirable.

Par rapport au montage sur véhicule décrit précédemment, les boîtiers décrits en référence aux figures 10 à 11B sont placés en bout de bras dans une des configurations décrites. Etant donné que le boîtier placé en bout de bras contient tous les organes de mesure physique, il est possible de placer l'électronique de commande et de traitement des signaux à l'intérieur des boîtiers IR placés au niveau des axes de rotation des roues des véhicules ou directement dans les boîtiers ou têtes de mesure.

Etant donné la compacité de la configuration du mode de réalisation des figures 11A et 11B, le volume du boîtier peut être inscrit dans un cube de moins de 10cm de côté, sur qui procure une économie de matière et un allégement des charges placées à l'extrémité des bras.

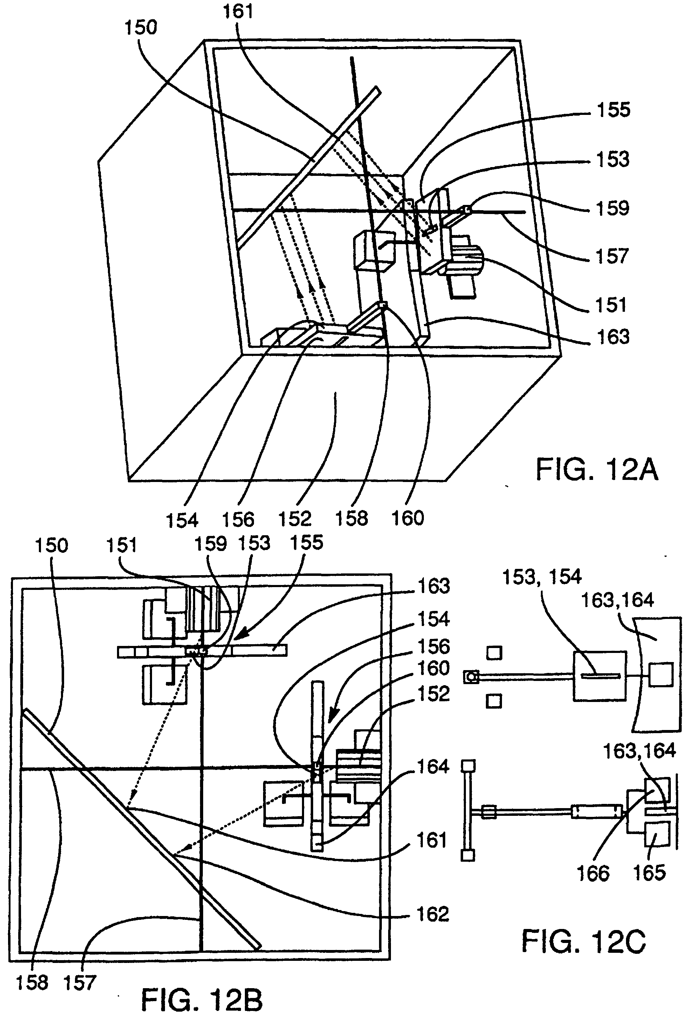

En référence aux figures 12A à 12C, une autre variante de boîtier selon l'invention utilise un couple de pendules disposés sur deux axes pendulaires de pivotement perpendiculaires l'un à l'autre.

Dans cette disposition, le capteur optique linéaire 150 est placé sensiblement horizontalement parallèlement à un plan diagonal de la conformation cubique du boîtier. Deux sources lumineuses 151 et 152 émettent chacune un rayonnement lumineux qui est diaphragmé respectivement par une fente 153 ou 154 pratiquée dans un cache 155 ou 156 opaque au rayonnement lumineux et monté sur chaque axe pendulaire respectif 157 ou 158.

Les rayonnements lumineux émis par chaque source lumineuse 151 ou 152 sont diaphragmés pour former des faisceaux plats par les fentes 153 et 154 orientées verticalement du fait de leur suspension pendulaire en 159 et 160, respectivement.

Les faisceaux plats diaphragmés par les fentes verticales 153 et 154 illuminent le capteur linéaire optique 150 aux emplacements 161 et 162, images respectives des sources 151 et 152 par le système optique envisagé.

Pour éviter des oscillations et des battements intempestifs, on prévoit avantageusement de monter les pendules portant les fentes 153 et 154 avec un système d'amortissement fournissant des positions verticales stables. A cet effet, on prévoit de placer dans le boîtier deux plaques de cuivre 163 et 164 situées sous les pendules portant les fentes 153 et 154 et d'utiliser le principe connu en soi du freinage par courants de FOUCAULT.

Le freinage par courants de FOUCAULT est avantageusement effectué en utilisant deux aimants 165 et 166 (respectivement 167 et 168) reliés à l'extrémité inférieure de chaque pendule. Il est connu que le balancement du pendule entraîne des courants induits dans la plaque de cuivre, ce qui, par effet d'auto-induction, tend à immobiliser les aimants permanents 165 et 166 en position d'équilibre stable.

Cette disposition avantageuse peut également être transposée si nécessaire au freinage stable en position vertical d'un miroir plan suspendu sur un axe pendulaire décrit précédemment en référence aux figures 10 à 11B.

Bien que le boîtier décrit en référence aux figures 12A à 12C ne soit pas représenté avec des fentes de définition d'image produisant les angles élémentaires au calcul du parallélisme, on comprendra que l'invention couvre également la variante de réalisation dans laquelle le boîtier de mesure des figures 12A à 12C est complété par des sources extérieures d'émission lumineuse et des fentes de formation d'image sur le capteur linéaire optique 150.

Dans ce mode de réalisation, les axes de suspension pendulaire sont perpendiculaires l'un à l'autre ce qui facilite l'établissement du programme de calcul et de traitement des signaux résultant des faisceaux émis directement par les sources 151 et 152 à travers les diaphragmes verticaux 153 et 154 sur le capteur linéaire 150.

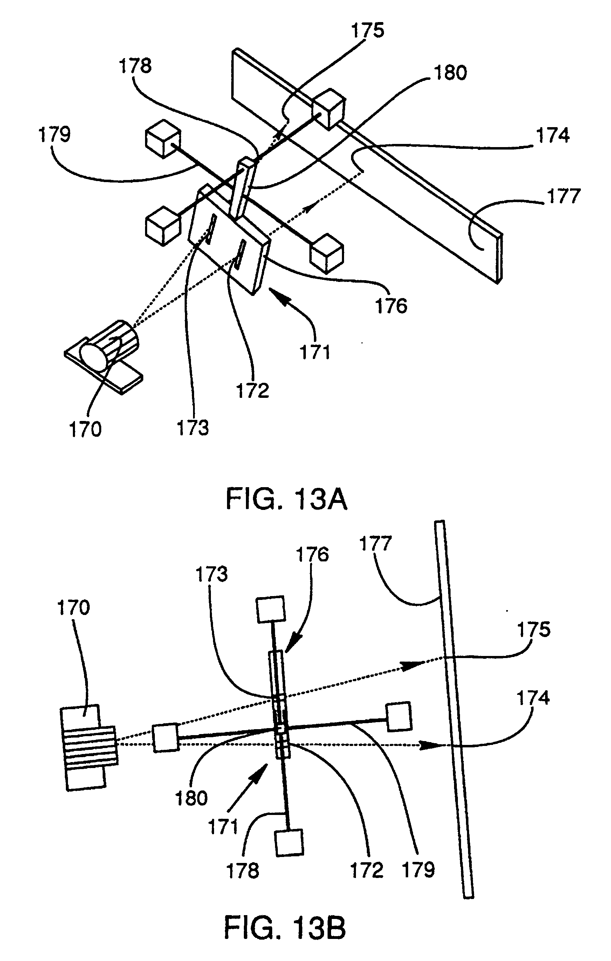

En référence aux figures 13A, 13B, un diaphragme pendulaire à deux fentes est représenté sur un montage à la Cardan.

Une source lumineuse 170 émet un rayonnement lumineux diaphragmé par le système 171 comprenant deux fentes 172 et 173 de manière à former deux images séparées en 174 et 175 sur un capteur linéaire optique 177. Les deux fentes de diaphragme 172 et 173 sont pratiquées dans un cache 176 opaque au rayonnement lumineux et suspendu par un axe selon un montage à la Cardan schématisé par la double suspension autour d'un premier axe 178 et autour d'un deuxième axe perpendiculaire 179 de l'arbre de pendule 180.

En raison de la liberté d'orientation du système 171 de diaphragme, l'orientation des fentes 172 et 173 est absolument verticale et permet la détermination de l'ensemble des informations nécessaires de la manière suivante :

la distance entre les barycentres des taches lumineuses 174 et 175 fournit un premier paramètre physique indiquant si le pendule 171 se rapproche ou s'éloigne de la source 170 d'émission lumineuse et la position du barycentre de l'une ou l'autre des taches lumineuses 174 et 175 fournit une indication par rapport à une position de référence de l'inclinaison de l'appareil.

Grâce à ces deux coordonnées, l'homme du métier retrouve par calcul inverse les inclinaisons verticales par rapport à deux plans perpendiculaires recherchées. A partir de ces inclinaisons verticales, il est connu de pouvoir calculer les paramètres habituels de mesure et de contrôle géométrique du véhicule par simple changement de coordonnées et application des formules connues du spécialiste.

Bien entendu, l'invention s'étend également au cas où l'on combine les dispositions décrites en référence aux figures 13A et 13B avec celles décrites en référence au boîtier des figures 1A à 9B pour fabriquer des boîtiers de mesure et dispositifs complets.

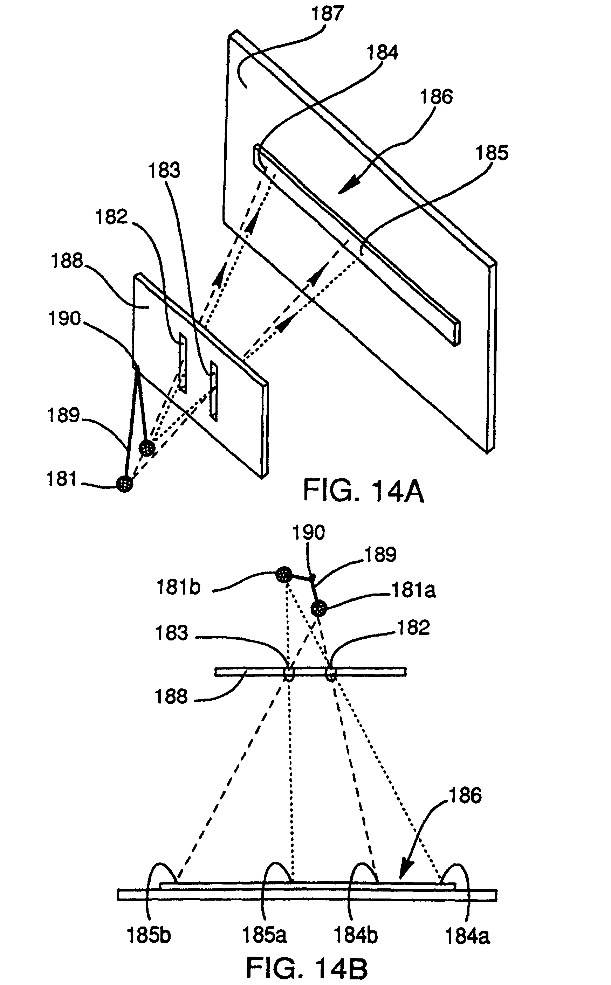

En référence aux figures 14A et 14B, une autre variante de réalisation de double inclinomètre vertical selon l'invention comporte une source lumineuse 181 émettant un rayonnement lumineux diaphragmé par deux fentes 182 et 183 pour former deux taches lumineuses 184 et 185 sur un capteur linéaire optique 186 placé sur une face de boîtier 187. Dans cet exemple, la plaque opaque 188 portant les deux fentes 182 et 183 de diaphragme est fixe par rapport au boîtier et la source lumineuse 181 est suspendue de manière pendulaire à un fil conducteur 189 fixé en 190 en un point fixe du boîtier. Ainsi, lorsque la source lumineuse 181 se déplace d'une première position 181a à une deuxième position 181b, les taches correspondantes 184a et 185a se déplacent en 184b et en 185b.

De manière analogue à ce qui a été expliqué en référence aux figures 13A et 13B, l'homme du métier déterminera sans difficultés les inclinaisons verticales par rapport à deux plans verticaux du boîtier de mesure contenant les éléments précités décrits. Cette disposition est avantageuse en ce qu'elle permet la fixation du capteur linéaire optique 186 parallèlement à une face d'un boîtier linéaire présentant une conformation cubique et est compatible avec les boîtiers comportant des fentes décrits précédemment en référence aux figures 1A à 10.

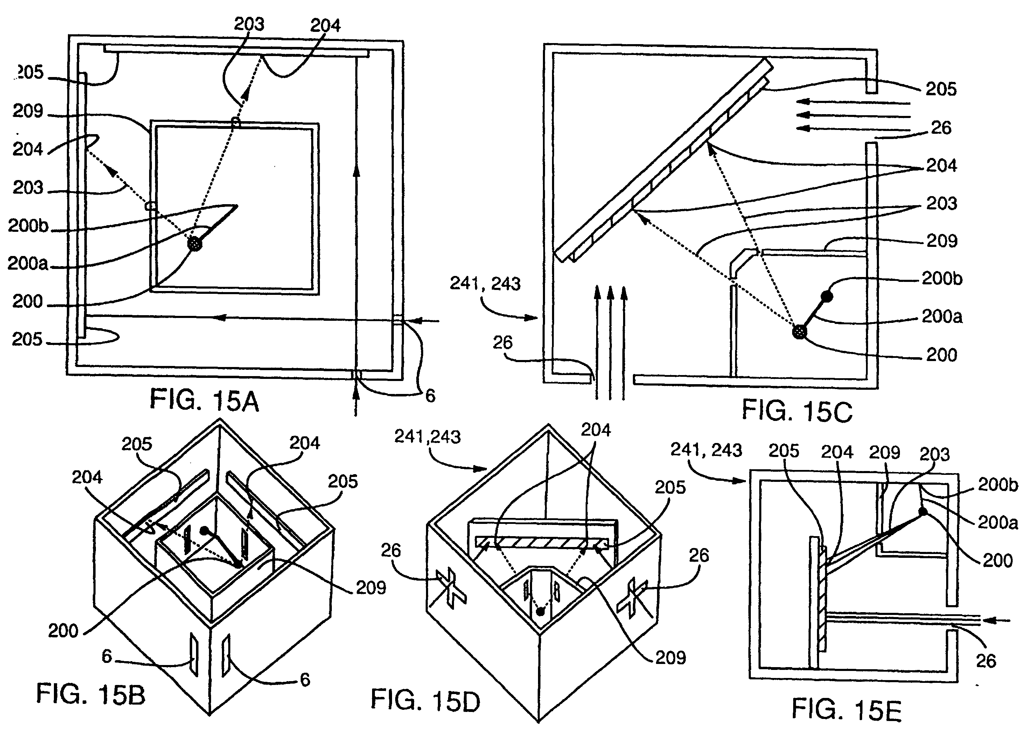

En référence aux figures 15A et 15B, une autre variante double inclinomètre vertical optique selon l'invention comporte une source lumineuse 200 suspendue pendulairement à un fil 200a conducteur relié à un point fixe 200b du boîtier de mesure. La source d'émission lumineuse 200 émet un rayonnement diaphragmé 203 par deux fentes d'une enceinte 209 opaque au rayonnement lumineux émis par la source 200. Des taches formées en 204 sur deux capteurs linéaires optiques 205 fixés sur deux faces perpendiculaires du boîtier de mesure présentant une conformation cubique fournissent directement par calcul inverse les coordonnées dans le plan horizontal de la source lumineuse 200. Le calcul inverse des inclinaisons verticales à l'aide de ces renseignements ne présente pas de difficultés pour l'Homme du métier. Ainsi, selon l'invention l'utilisation de deux rayonnements horizontaux formant des images sur des capteurs optiques 205 linéaires orientés également horizontalement permet de déterminer sans difficulté les inclinaisons verticales d'un boîtier de mesure.

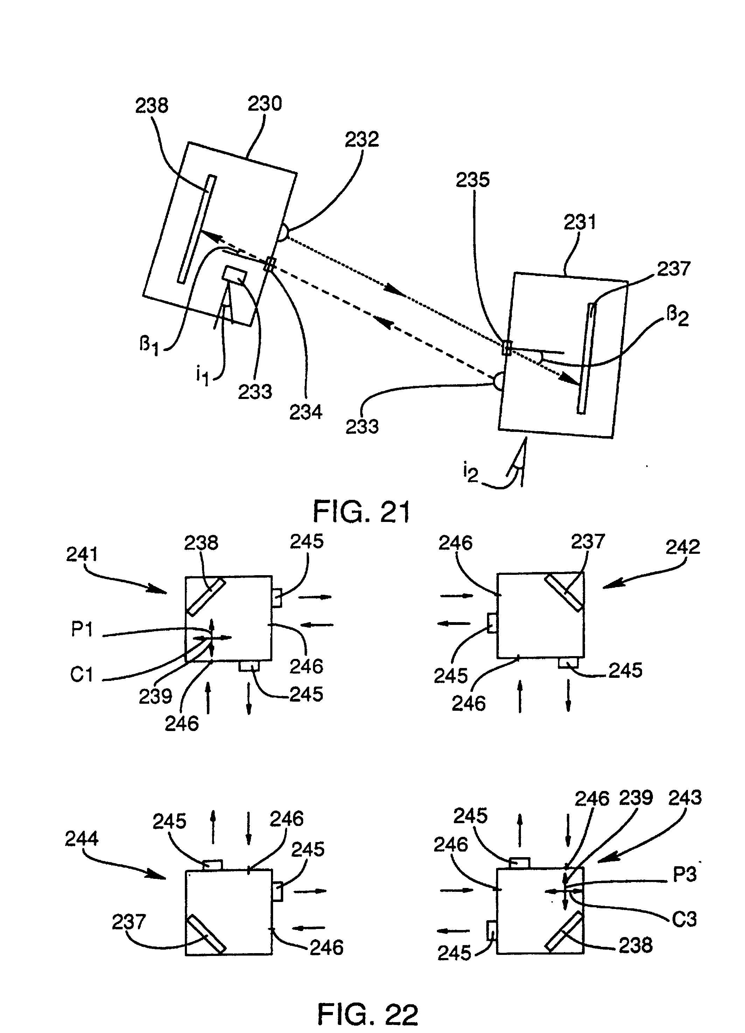

La description qui précède en référence aux figures 15A et 15B s'applique également aux figures 15C, 15D et 15E où les références identiques désignent des éléments identiques à ceux des figures 15A et 15B. La seule différence consiste en la présence d'un moyen de définition d'image en croix, du genre fente en croix analogue à celle décrite sous la référence 26 dans les figures 3A et 3B. Le capteur optique linéaire 205 est un capteur linéaire optique unique placé dans un plan diagonal de la conformation cubique du boîtier. Ce mode de réalisation permet la mise en oeuvre de l'agencement correspondant au montage décrit ci-après en référence aux figures 21 et 22.

L'invention s'étend également au cas où dans cette variante de réalisation, source lumineuse est fixe et l'enceinte comportant les deux fentes de diaphragme est suspendue de manière pendulaire pour que les deux fentes faisant fonction du diaphragme soient orientées verticalement.

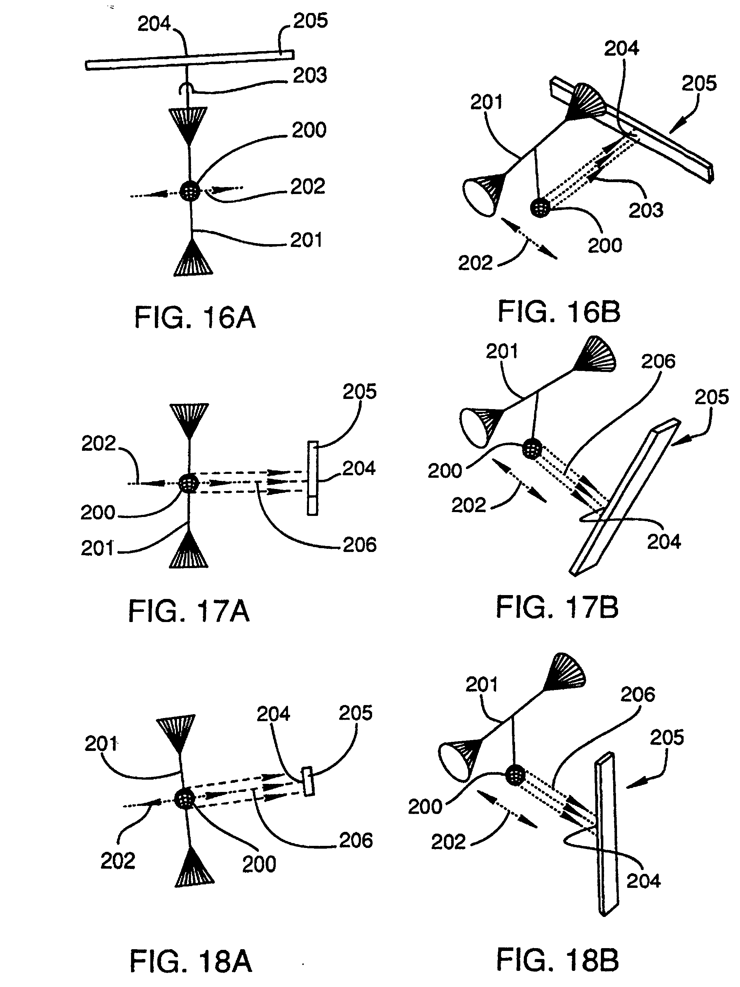

En référence aux figures 16A et 16B, un inclinomètre à rayonnement horizontal pour la mesure d'un angle d'inclinaison verticale comporte une source d'émission lumineuse émettant un rayonnement sous forme de pinceaux plats venant frapper un capteur linéaire optique disposé sensiblement horizontalement.

La source lumineuse 200 est suspendue sur un axe 201 de pivotement pendulaire et se déplace dans le sens de la flèche 202 lorsque l'angle d'inclinaison par rapport à la verticale varie. le faisceau plat 203 orienté sensiblement verticalement est émis par la source 200 vient frapper le capteur linéaire optique 205 en 204. Lorsque la source lumineuse à pinceaux plats 200 se déplace dans le sens de la flèche 202, le déplacement du pinceau plat et de la tache lumineuse 204 correspondante fournit une indication de la variation d'inclinaison verticale en résolvant l'équation suivante : d = 1 tangente α, où d est le déplacement de la tache 204, l est la longueur du pendule ou le rayon de pivotement de la source 200 et α est la variation d'inclinaison verticale.

Les figures 17A et 17B représentent une variante de réalisation dans laquelle la source 200 suspendue à l'axe pendulaire de pivotement 201 et susceptible de se déplacer dans le sens de la flèche émet un pinceau plat 206 qui n'est plus perpendiculaire au sens de déplacement 202 mais co-linéaire à celui-ci. La tache 205 formée sur le capteur optique linéaire 204 incliné avec un angle par rapport à la verticale se déplace en changeant d'altitude, ce qui fournit également une indication de la variation d'inclinaison par rapport à la verticale au moyen de la même formule que la formule précédente.

Dans la variante représentée aux figures 18A et 18B, seule l'orientation du capteur optique linéaire 205 a changé : le capteur optique linéaire 205 est positionné verticalement et fournit ainsi directement une mesure de la variation d'altitude.

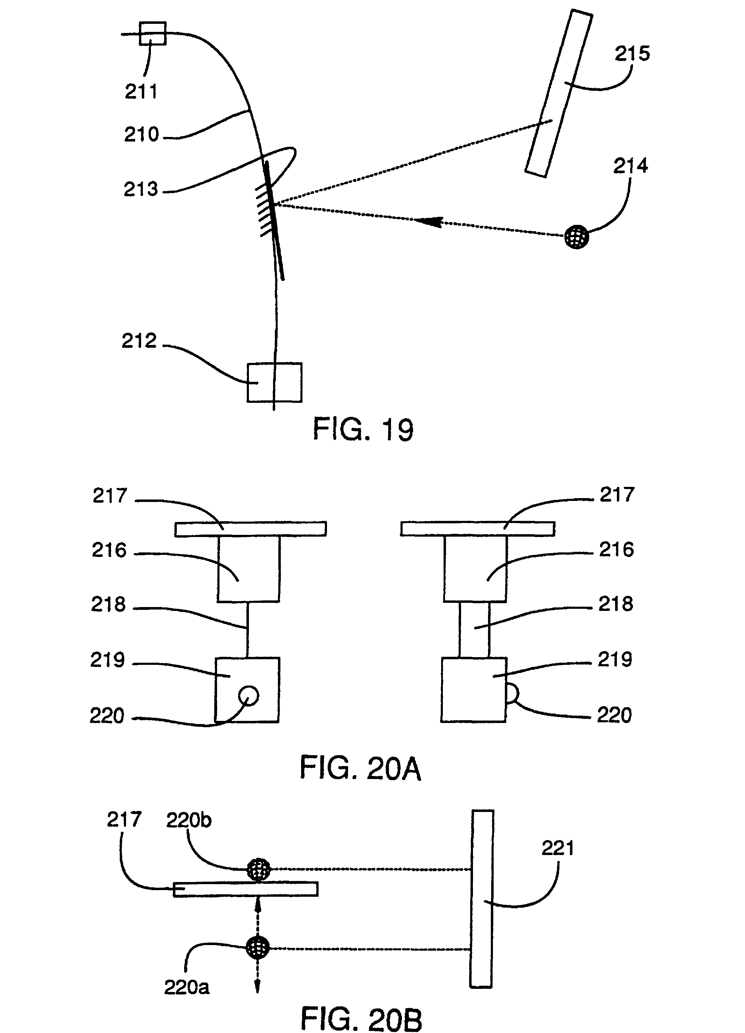

En référence à la figure 19, un mode de réalisation avantageux équivalent à une suspension pendulaire d'un inclinomètre pour la mesure de l'inclinaison verticale en utilisant un rayonnement lumineux sensiblement horizontal comporte une lame flexible résiliente 210 encastrée à un point fixe 211 soumise à son extrémité libre à la force résultant d'une masse de lestage 212 prend une configuration imposée naturellement par ces caractéristiques élastiques. En fonction de l'inclinaison du boîtier dont est solidaire le point d'encastrement 211, la lame résiliente 210 sera plus ou moins courbée, de sorte que l'inclinaison d'un miroir plan 213 collé sur la lame résiliente flexible 210 variera de manière déterminable par calcul en fonction de l'inclinaison verticale du boîtier. Le petit miroir plan 213 a pour fonction de réfléchir un faisceau lumineux émis par une source 214 sur un capteur linéaire optique 215.

Cette disposition avantageuse s'applique à toutes les suspensions pendulaires pivotantes prévues dans les passages précédentes de la description. La lame résiliente flexible 210 est de préférence une lame métallique mince et souple présentant une épaisseur comprise entre un centième et cinq centièmes de millimètres et une largeur supérieure à 5mm suffisante pour éviter les torsions latérales.

La caractéristique de l'inclinaison du miroir 213 est déterminée par calcul et vérifiée par étalonnage lors de la fabrication en usine.

Le capteur optique linéaire 215 représenté schématiquement peut être placé dans une des configurations quelconques prévues aux figures précédentes, notamment aux figures 17A à 18B, dans une position voisine de la verticale.

De préférence, pour éviter une déformation d'extrémité à l'extrémité libre du ruban résilient 210, on prévoit de fixer la masse 212 sous forme de deux demi-masses fixées l'une à l'autre de part et d'autre du ruban flexible 210. Le miroir 213 peut être constitué par polissage local du ruban flexible 210 dans le cas d'une lame métallique inoxydable.

En référence aux figures 20A et 20B, un autre mode de réalisation de suspension pendulaire est particulièrement avantageux dans le cas de la suspension de source lumineuse, notamment selon l'une des dispositions décrites en référence aux figures 16A et 16B.

Un barreau 216 solidaire du boîtier 217 porte à son extrémité inférieure une bande flexible souple 218 qui soutient une masselotte 219 contenant une source lumineuse 220 alimentée de préférence par la bande flexible souple 218.

A cet effet, on utilise de préférence comme bande flexible souple un circuit souple du genre languette de clavier comprenant des pistes sérigraphiées en cuivre ou des impressions en encre conductrice de métaux nobles (argent) sur une bande de matière synthétique par exemple du genre MYLAR (marque déposée par la société de droit américain DUPONT DE NEMOURS).

Ce mode de suspension présente ainsi l'avantage d'une grande souplesse et d'une alimentation directe en électricité sans introduction de couples parasites dûs par des fils d'alimentation électrique.

La source lumineuse 220 est de préférence une source du genre diode électro-luminescente ou équivalent avec un faisceau d'émission focalisé, de manière à produire un rayonnement sensiblement horizontal produisant sur un capteur linéaire optique 221 orienté au moins partiellement horizontalement, une tache lumineuse dont le déplacement permet de déterminer l'angle d'inclinaison vertical par rapport à un plan vertical pré-déterminé.

De préférence, les fixations se font par pincement de la lame flexible 218 assurant à la fois une fonction de suspension et d'alimentation électrique : le montage par pincement évite l'introduction de couples parasites et ne produit pas de déviation sensible ou de torsion du ruban souple 218.

Sur la figure 21, on détermine l'inclinaison verticale i₂ d'un boîtier 231 en utilisant un boîtier 230 contenant un inclinomètre permettant de déterminer deux inclinaisons verticales à l'aide de la formule suivante : i₂ = i₁ + β₁ - β₂, où i₁ est l'inclinaison du boîtier 230 mesurée avec un inclinomètre 239, et β₁ et β₂ sont les angles de correction verticale formés par les fentes sensiblement horizontales 234 et 235 ou moyens de définition d'image analogues sur les capteurs linéaires optiques 237 et 238.

Comme on le voit sur la figure 22, il suffit alors de deux boîtiers 241 et 243 à doubles inclinomètres et fentes horizontales et de deux boîtiers 242 et 244 avec uniquement des fentes horizontales pour obtenir tous les angles caractéristiques du véhicule.

Les quatre boîtiers 241 à 244 sont disposés de manière analogue à celles décrites en référence aux figures 1A à 9B et comportent chacun des fentes 246 en croix et des sources 245.

Les boîtiers 241 et 243 possèdent par exemple des inclinomètres à double axe. Les boîtiers 242 et 244 ne possèdent pas d'inclinomètres. Le carrossage du boîtier 242 est calculé avec la valeur de carrossage C₁ obtenue par 241 et corrigé à l'aide des mesures entre les boîtiers 241 et 242 comme expliqué en référence.

L'angle de pivot du boîtier 242 est calculé avec la valeur de pivot P₃ obtenue par 243 et corrigée à l'aide des mesures entre les boîtiers 242 et 243 comme expliqué en référence à la figure 21.

Il en est de même pour le boîtier 244, le carrossage du boîtier 244 est calculé avec la valeur de carrossage C₃ de 243 et les mesures entre les boîtiers 243 et 244 comme expliqué en référence à la figure 21.

L'angle de pivot du boîtier 244 est calculé avec l'angle de pivot P₁ du boîtier 241 entre les boîtiers 241 et 244 comme expliqué en référence à la figure 21.

Ce mode de réalisation préféré utilisant au total deux inclinomètres à double axe et quatre capteurs linéaires optiques est avantageux et économique à fabriquer.

L'invention décrite en référence à des modes de réalisation particuliers n'est nullement limitée mais couvre au contraire toute modification de forme et toute variante de réalisation de l'invention dans lequel des paramètres physiques déterminés en vue de la mesure et du contrôle de la géométrie de véhicules sont obtenus à l'aide de capteurs optiques linéaires utilisés pour au moins deux rayonnements horizontaux simultanément ou séquentiellement.

## Revendications

1. Dispositif de mesure et de contrôle géométrique de véhicules à roues, du type comportant au moins un boîtier avec des moyens de détermination de paramètres physiques utilisables pour le calcul des angles et distances caractéristiques de véhicules à contrôler, chaque moyen de détermination de paramètres physiques comportant en combinaison : au moins une source d'émission lumineuse (5, 15, 25, 35, 45, 95, 100, 110, 120, 130, 140, 151, 152, 170, 181, 200, 214, 220), apte à émettre au moins un rayonnement lumineux sensiblement horizontal (8, 18, 28, 38, 48, 98, 101, 111, 124, 131, 141, 203, 206), au moins un moyen de formation d'image (6, 16, 26, 36, 46, 96) de ladite source sur au moins un capteur linéaire optique (7, 17, 27, 37, 47, 97, 125, 150, 177, 186, 205, 215, 221), de préférence du genre CCD, capteur à couplage de charges, ou PSD, capteur sensible à la position, **caractérisé en ce que** un même capteur linéaire optique situé à l'intérieur dudit boîtier est apte à recevoir simultanément au moins deux rayonnements lumineux sensiblement horizontaux en provenance d'au moins deux sources distinctes agencées à l'extérieur du boîtier et ledit capteur est sensible simultanément ou séquentiellement auxdits au moins deux rayonnements lumineux.

2. Dispositif selon la revendication 1, **caractérisé en ce que** le dispositif comporte quatre boîtiers (1-4, 21-24, 41-44, 61-64, 71-74, 81-84) de mesure disposés selon une configuration "régulière".

3. Dispositif selon la revendication 1, **caractérisé en ce que** le dispositif comporte quatre boîtiers (1-4, 21-24, 41-44, 61-64, 71-74, 81-84) de mesure disposés selon une configuration "croisée".

4. Dispositif selon la revendication 2 ou la revendication 3, **caractérisé en ce que** le dispositif comporte quatre boîtiers (31-34, 41-44) de mesure agencés pour une mesure de paramètres physiques selon les deux diagonales (36b, 46b) du quadrilatère formé par les boîtiers.

5. Dispositif selon l'une quelconque des revendications 1 à 4, **caractérisé en ce que** les moyens (26) de formation d'image de source d'émission lumineuse sont agencés pour la mesure des altitudes relatives des boîtiers les uns par rapport aux autres.

6. Dispositif selon la revendication 5, **caractérisé en ce que** les moyens (26) de formation d'image de source d'émission lumineuse comprennent au moins une fente en croix ou deux fentes perpendiculaires.

7. Dispositif selon la revendication 2 ou la revendication 3, **caractérisé en ce que** les boîtiers (61-64) sont tous situés à l'extrémité de bras (60a, 60d) s'étendant vers l'extérieur du véhicule.

8. Dispositif selon la revendication 2 ou la revendication 3, **caractérisé en ce que** les boîtiers (71-74) sont tous situés à l'extrémité des bras (70a, 70d) s'étendant vers l'intérieur du véhicule.

9. Dispositif selon la revendication 2 ou la revendication 3, **caractérisé en ce que** les boîtiers (81-84) sont situés à l'extrémité des bras (80a, 80d) s'étendant vers l'avant du véhicule.

10. Dispositif selon la revendication 2 ou la revendication 3, **caractérisé en ce que** les boîtiers (91-94) sont situés à l'extrémité des bras (90a, 90d) s'étendant vers l'arrière du véhicule.

11. Dispositif selon l'une quelconque des revendications 7 à 9, **caractérisé en ce que** les boîtiers (61-64, 71-74, 81-84, 91-94) sont déconnectables ou détachables mécaniquement par rapport aux bras (60a-60d, 70a-70d, 80a-80d, 90a-90d) de montage, de manière à modifier la configuration de montage sur les véhicules à contrôler.

12. Dispositif selon l'une quelconque des revendications précédentes, **caractérisé en ce qu'**au moins un capteur linéaire optique (97, 125, 150, 177, 205, 215, 221) reçoit au moins un rayonnement sensiblement horizontal (104, 114, 134, 144, 203, 206) agencé pour déterminer des paramètres physiques permettant le calcul d'angles d'inclinaisons verticales.

13. Dispositif selon la revendication 12, **caractérisé en ce que** le dispositif comporte une source (206, 220) d'émission lumineuse montée libre en pivotement autour d'un axe fixe (201) par rapport audit capteur linéaire optique (205) et apte à émettre au moins un rayonnement (203, 206) sensiblement horizontal.

14. Dispositif selon la revendication 12, **caractérisé en ce que** le dispositif comporte une source (200) d'émission lumineuse montée de manière pendulaire sur un point fixe (202) par rapport audit capteur linéaire optique (205), et apte à émettre un rayonnement horizontal.

15. Dispositif selon la revendication 12, **caractérisé en ce que** le dispositif comporte une source d'émission (100, 110, 130, 140, 151, 152, 170) lumineuse apte à émettre au moins un rayonnement horizontal (104, 114, 134, 144) et montée en position fixe par rapport audit capteur linéaire optique ; ainsi qu'au moins un organe (102, 112, 126, 142, 153, 154, 172, 173, 203, 213) de réflexion, de diaphragme ou de focalisation qui réfléchit, diaphragme, ou focalise un rayonnement horizontal (104, 114, 134, 144) avant que ce rayonnement horizontal (104, 114, 134, 144) illumine ledit capteur linéaire optique (97, 125, 150, 177, 205, 215, 221).

16. Dispositif selon la revendication 15, **caractérisé en ce que** ledit organe est un miroir (102, 112, 126, 142, 213) ou organe réfléchissant analogue, monté à pivotement autour d'un axe fixe par rapport à ladite source et par rapport audit capteur linéaire optique.

17. Dispositif selon la revendication 15, **caractérisé en ce que** ledit organe est un cache (155, 156, 171, 209) comportant au moins une fente (153, 154, 172, 173, 203) de définition d'image, monté à pivotement autour d'un axe fixe par rapport à ladite source et par rapport audit capteur optique.

18. Dispositif selon la revendication 17, **caractérisé en ce que** ledit cache (176, 209) comporte deux fentes (172, 173, 203) de définition d'image.

19. Dispositif selon la revendication 17, **caractérisé en ce que** ledit cache (209) est en forme de boîte comportant deux fentes (203) disposées sur deux faces distinctes de la boîte (209).

20. Dispositif selon la revendication 18, **caractérisé en ce que** le cache (176) est suspendu par un montage à la Cardan, avec deux degrés de liberté en pivotement (178, 179).

21. Dispositif selon la revendication 12, **caractérisé en ce que** le dispositif comporte une source d'émission lumineuse (220) montée à l'extrémité d'une bande souple (218) permettant le pivotement, dont l'autre extrémité est encastrée en position fixe (216) par rapport audit capteur linéaire optique.

22. Dispositif selon la revendication 15, **caractérisé en ce que** ledit organe (213) correspondant est fixé sur une lame résiliente (210) flexible encastrée à une extrémité (211) en position fixe par rapport audit capteur linéaire (215) optique et portant à son autre extrémité une masselotte (212) de lestage.

23. Dispositif selon l'une quelconque des revendications 2 à 4, **caractérisé en ce que** le dispositif comporte quatre capteurs linéaires (237, 238) disposés chacun dans un boîtier (241-244), et deux inclinomètres (239) à double axe disposés dans deux boîtiers diagonalement opposés (241, 243), de manière à minimiser le nombre total de capteurs utilisés.

## Patentansprüche

1. Vorrichtung zur Vermessung und geometrischen Kontrolle von Kraftfahrzeugen mit mindestens einem Gehäuse mit Mitteln zur Bestimmung von physikalischen Parametern, die zur Berechnung der für die zu kontrollierenden Fahrzeuge charakteristischen Winkel und Abstände verwendbar sind, wobei jedes Mittel zur Bestimmung von physikalischen Parametern kombiniert aufweist: mindestens eine Lichtquelle (5, 15, 25, 35, 45, 95, 100, 110, 120, 130, 140, 151, 152,170, 181, 200, 214, 220), die geeignet ist, mindestens einen im wesentlichen horizontalen Lichtstrahl auszusenden (8, 18, 28, 38, 48, 98, 101, 111, 124, 131, 141, 203, 206), mindestens ein Mittel zur Bildung von Bildern (6, 16, 26, 36, 46, 96) der genannten Quelle auf mindestens einem linearen optischen Sensor (7, 17, 27, 37, 47, 97, 125 150, 177, 186, 205, 215, 221), vorzugsweise einem CCD, einem ladungsgekoppelten Sensor, oder einem PSD, einem positionsempfindlichen Sensor,
**dadurch gekennzeichnet,**
**dass** ein einziger linearer optischer Sensor, der sich im Inneren dieses Gehäuses befindet, geeignet ist, mindestens zwei im wesentlichen horizontale Lichtstrahlen, die von mindestens zwei unterschiedlichen Quellen außerhalb des Gehäuses stammen, zu empfangen, und dass dieser Sensor entweder gleichzeitig oder nacheinander lichtempfindlich auf diese mindestens zwei Lichtstrahlen reagiert.

2. Vorrichtung nach Anspruch 1,
**dadurch gekennzeichnet,**
**dass** sie vier Vermessungs-Gehäuse (1-4, 21-24, 41-44, 61-64, 71-74, 81-84) aufweist, die in einer "normalen" Konfiguration angeordnet sind.

3. Vorrichtung nach Anspruch 1,
**dadurch gekennzeichnet,**
**dass** sie vier Vermessungs-Gehäuse (1-4, 21-24, 41-44, 61-64, 71-74, 81-84) aufweist, die in einer "Über Kreuz"-Konfiguration angeordnet sind.

4. Vorrichtung nach Anspruch 2 oder Anspruch 3,
**dadurch gekennzeichnet,**
**dass** sie vier Vermessungs-Gehäuse (31-34, 41-44) aufweist, die für eine Messung von physikalischen Parametern auf den zwei Diagonalen (36b, 46b) des von den Gehäusen gebildeten Vierecks angeordnet sind.

5. Vorrichtung nach einem der Ansprüche 1 bis 4,
**dadurch gekennzeichnet,**
**dass** die Mittel (26) zur Bildung von Bildern aus einer Lichtquelle für die Messung der relativen Höhen der Gehäuse zueinander angeordnet sind.

6. Vorrichtung nach Anspruch 5,
**dadurch gekennzeichnet,**
**dass** die Mittel (26) zur Herstellung von Bildern aus einer Lichtquelle mindestens einen Kreuzschlitz oder zwei senkrecht zueinander verlaufende Schlitze umfassen.

7. Vorrichtung nach Anspruch 2 oder Anspruch 3,
**dadurch gekennzeichnet,**
**dass** sich die Gehäuse (61 - 64) alle am Ende von Armen (60a - 60d) befinden, die sich am Fahrzeug nach außen erstrecken.

8. Vorrichtung nach Anspruch 2 oder Anspruch 3,
**dadurch gekennzeichnet,**
**dass** sich die Gehäuse (71 - 74) alle am Ende von Armen (70a - 70d) befinden, die sich am Fahrzeug nach innen erstrecken.

9. Vorrichtung nach Anspruch 2 oder Anspruch 3,
**dadurch gekennzeichnet,**
**dass** sich die Gehäuse (81 - 84) am Ende von Armen (80a - 80d) befinden, die sich am Fahrzeug nach vom erstrecken.

10. Vorrichtung nach Anspruch 2 oder Anspruch 3,
**dadurch gekennzeichnet,**
**dass** sich die Gehäuse (91 - 94) am Ende von Armen (90a - 90d) befinden, die sich am Fahrzeug nach hinten erstrecken.

11. Vorrichtung nach einem der Ansprüche 7 bis 9,
**dadurch gekennzeichnet,**
**dass** die Gehäuse (61 - 64, 71 - 74, 81 - 84, 91 - 94) mechanisch von den Tragarmen (60a - 60d, 70a - 70d, 80a - 80d, 90a - 90d) trennbar oder abnehmbar sind, so dass ihre Montagekonfiguration an den zu vermessenden Fahrzeugen geändert werden kann.

12. Vorrichtung nach einem der vorherigen Ansprüche,
**dadurch gekennzeichnet,**
**dass** mindestens ein linearer optischer Sensor (97, 125 150, 177, 205, 215, 221) mindestens einen im wesentlichen horizontalen Lichtstrahl (104, 114, 134, 144, 203, 206) empfängt, um physikalische Parameter zu bestimmen, die die Berechnung von vertikalen Neigungswinkeln ermöglichen.

13. Vorrichtung nach Anspruch 12,
**dadurch gekennzeichnet,**
**dass** sie eine Lichtquelle (206, 220) aufweist, die frei schwenkbar um eine feststehende Achse (201) gegenüber dem genannten linearen optischen Sensor (205) angebracht ist und geeignet ist, mindestens einen im wesentlichen horizontalen Lichtstrahl (203, 206) auszusenden.

14. Vorrichtung nach Anspruch 12,
**dadurch gekennzeichnet,**
**dass** sie eine Lichtquelle (200) aufweist, die pendelnd an einem festen Punkt (202) gegenüber dem genannten linearen optischen Sensor (205) angebracht ist und geeignet ist, einen horizontalen Lichtstrahl auszusenden.

15. Vorrichtung nach Anspruch 12,
**dadurch gekennzeichnet,**
**dass** sie eine Lichtquelle (100, 110, 130, 140, 151, 152,170) aufweist, die geeignet ist, mindestens einen horizontalen Lichtstrahl (104, 114, 134, 144) auszusenden, und die in einer festen Position zu dem genannten linearen optischen Sensor angebracht ist, sowie mindestens ein Reflektor-, Blenden- oder Fokussierungsorgan (102, 112, 126, 142, 153, 154, 172, 173, 203, 213) aufweist, das einen horizontalen Lichtstrahl (104, 114, 134, 144) reflektiert, abblendet oder fokussiert, bevor dieser horizontale Lichtstrahl (104, 114, 134, 144) auf den genannten linearen optischen Sensor (97, 125 150, 177, 205, 215, 221) fällt.

16. Vorrichtung nach Anspruch 15,
**dadurch gekennzeichnet,**
**dass** das genannte Organ ein Spiegel (102, 112, 126, 142, 213) oder ein analoges reflektierendes Organ ist, das schwenkbar um eine feste Achse zu der genannten Lichtquelle und zu dem linearen optischen Sensor angebracht ist.

17. Vorrichtung nach Anspruch 15,
**dadurch gekennzeichnet,**
**dass** das genannte Organ eine Maske (155, 156, 171, 209) mit mindestens einem Schlitz (153, 154, 172, 173, 203) zur Bilddefinition ist, das schwenkbar um eine feste Achse zu der Lichtquelle und zu dem optischen Sensor angebracht ist.

18. Vorrichtung nach Anspruch 17,
**dadurch gekennzeichnet,**
**dass** diese Maske (176, 209) zwei Schlitze (172, 173, 203) zur Bilddefinition aufweist.

19. Vorrichtung nach Anspruch 17,
**dadurch gekennzeichnet,**
**dass** diese Maske (209) kastenförmig mit zwei Schlitzen (203) ausgeführt ist, welche an zwei verschiedenen Seiten des Kastens (209) angeordnet sind.

20. Vorrichtung nach Anspruch 18,
**dadurch gekennzeichnet,**
**dass** die Maske (176) mit zwei Schwenk-Freiheitsgraden (178, 179) kardanisch aufgehängt ist.

21. Vorrichtung nach Anspruch 12,
**dadurch gekennzeichnet,**
**dass** sie eine Lichtquelle (220) aufweist, die am Ende eines biegsamen Bandes (218) angebracht ist, der die Schwenkbewegung ermöglicht, und dessen anderes Ende in feststehender Stellung (216) zu dem linearen optischen Sensor eingebaut ist.

22. Vorrichtung nach Anspruch 15,
**dadurch gekennzeichnet,**
**dass** das entsprechende Organ (213) an einem federnden Blatt (210) befestigt ist, das mit einem Ende (211) in feststehender Stellung zu dem linearen optischen Sensor (215) eingebaut ist und an seinem anderen Ende einen Ballast-Speiser (212) trägt.

23. Vorrichtung nach einem der Ansprüche 2 bis 4,
**dadurch gekennzeichnet,**
**dass** sie vier lineare Sensoren (237, 238) aufweist, die jeweils in einem Gehäuse (241-244) angeordnet sind, und zwei Querneigungsmesser (239) mit doppelter Achse aufweist, die in zwei einander diagonal gegenüberliegenden Gehäuse (241-244) angeordnet sind, so dass die Gesamtanzahl der verwendeten Sensoren auf ein Minimum beschränkt wird.

## Claims

1. Device for the geometric measurement and inspection of wheeled vehicles, of the type comprising at least one housing with means of determining physical parameters that can be used for the calculation of the angles and distances characteristic of vehicles to be inspected, each means of determining physical parameters comprising in combination: at least one source of luminous emission (5, 15, 25, 35, 45, 95, 100, 110, 120, 130, 140, 151, 152, 170, 181, 200, 214, 220), capable of emitting at least one substantially horizontal light beam (8, 18, 28, 38, 48, 98, 101, 111, 124, 131, 141, 203, 206), at least one means of forming an image (6, 16, 26, 36, 46, 96) of said source on at least one linear optical detector (7, 17, 27, 37, 47, 97, 125, 150, 177, 186, 205, 215, 221) preferably of the CCD, charge coupled device, or PSD, position sensitive detector type, **characterised in that** an identical linear optical detector situated inside said housing is capable of receiving simultaneously at least two substantially horizontal light beams originating from at least two distinct sources arranged outside the housing and said detector is sensitive simultaneously or sequentially to said at least two light beams.

2. Device according to claim 1, **characterised in that** the device comprises four measurement housings (1-4, 21-24, 41-44, 61-64, 71-74, 81-84) arranged in a "regular" configuration.

3. Device according to claim 1, **characterised in that** the device comprises four measurement housings (1-4, 21-24, 41-44, 61-64, 71-74, 81-84) arranged in a "crossed" configuration.

4. Device according to claim 2 or claim 3, **characterised in that** the device comprises four measurement housings (31-34, 41-44) arranged for measurement of physical parameters along the two diagonals (36b, 46b) of the quadrilateral formed by the housings.

5. Device according to any one of claims 1 to 4, **characterised in that** the means (26) of forming an image of the source of luminous emission are arranged for the measurement of the relative heights of the housings in relation to each other.

6. Device according to claim 5, **characterised in that** the means (26) of forming an image of the source of luminous emission comprise at least one crosswise slot or two perpendicular slots.

7. Device according to claim 2 or claim 3, **characterised in that** the housings (61-64) are all situated at the ends of arms (60a, 60d) extending towards the outside of the vehicle.

8. Device according to claim 2 or claim 3, **characterised in that** the housings (71-74) are all situated at the ends of arms (70a, 70d) extending towards the inside of the vehicle.

9. Device according to claim 2 or claim 3, **characterised in that** the housings (81-84) are situated at the ends of arms (80a, 80d) extending towards the front of the vehicle.

10. Device according claim 2 or claim 3, **characterised in that** the housings (91-94) are situated at the ends of arms (90a, 90d) extending towards the rear of the vehicle.

11. Device according to any one of claims 7 to 9, **characterised in that** the housings (61-64, 71-74, 81-84, 91-94) can be disconnected or detached mechanically in relation to the mounting arms (60a-60d, 70a-70d, 80a-80d, 90a-90d), so as to modify the mounting configuration on the vehicles to be inspected.

12. Device according to any one of the preceding claims, **characterised in that** at least one linear optical detector (97, 125, 150, 177, 205, 215, 221) receives at least one substantially horizontal beam (104, 114, 134, 144, 203, 206) arranged to determine physical parameters for calculating vertical angles of inclination.

13. Device according to claim 12, **characterised in that** the device comprises a source (206, 220) of luminous emission mounted to pivot freely round a fixed axle (201) in relation to said linear optical detector (205) and capable of emitting at least one substantially horizontal beam (203, 206).

14. Device according to claim 12, **characterised in that** the device comprises a source (200) of luminous emission mounted in pendulum fashion on a fixed point (202) in relation to said linear optical detector (205), and capable of emitting a horizontal beam.

15. Device according to claim 12, **characterised in that** the device comprises a source of luminous emission (100, 110, 130, 140, 151, 152, 170) capable of emitting at least one horizontal beam (104, 114, 134, 144) and mounted in a fixed position in relation to said linear optical detector; together with at least one reflecting, stopping down or focussing component (102, 112, 126, 142, 153, 154, 172, 173, 203, 213) which reflects, stops down or focuses a horizontal beam (104, 114, 134, 144) before that horizontal beam (104, 114, 134, 144) illuminates said linear optical detector (97, 125, 150, 177, 205, 215, 221).

16. Device according to claim 15, **characterised in that** said component is a mirror (102, 112, 126, 142, 213) or similar reflecting component, mounted to pivot round an axle that is fixed in relation to said source and in relation to said linear optical detector.

17. Device according to claim 15, **characterised in that** said component is a mask (155, 156, 171, 209) comprising at least one image definition slot (153, 154, 172, 173, 203), mounted to pivot round an axle that is fixed in relation to said source and in relation to said optical detector.

18. Device according to claim 17, **characterised in that** said mask (176, 209) comprises two image definition slots (172, 173, 203).

19. Device according to claim 17, **characterised in that** said mask (209) is in the form of a box comprising two slots (203) arranged on two distinct faces of the box (209).

20. Device according to claim 18, **characterised in that** the mask (176) is suspended by a Cardan mount, with two degrees of pivotal freedom (178, 179).

21. Device according to claim 12, **characterised in that** the device comprises a source of luminous emission (220) mounted at the end of a flexible band (218) allowing pivoting, of which the other end is embedded in a fixed position (216) in relation to said linear optical detector.

22. Device according to claim 15, **characterised in that** said corresponding component (213) is fixed on a resilient flexible strip (210) embedded at one end (211) in a fixed position in relation to said linear optical detector (215) and carrying a counterweight (212) at its other end.

23. Device according to any one of claims 2 to 4, **characterised in that** the device comprises four linear detectors (237, 238) each arranged in a housing (241-244), and two double-axis inclinometers (239) arranged in two diagonally opposed housings (241, 243), so as to minimise the total number of detectors used.
